(19) 

Europäisches Patentamt
European Patent Office
Office européen des brevets

(11) **EP 4 693 115 A1**

(12) **EUROPEAN PATENT APPLICATION**

(43) Date of publication:
**11.02.2026 Bulletin 2026/07**

(21) Application number: **25191110.3**

(22) Date of filing: **22.07.2025**

(51) International Patent Classification (IPC):
***G06N 10/20*** (2022.01)   ***G06N 10/70*** (2022.01)

(52) Cooperative Patent Classification (CPC):
**G06N 10/70; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.08.2024 JP 2024133906**

(71) Applicant: **FUJITSU LIMITED**
**Kawasaki-shi, Kanagawa 211-8588 (JP)**

(72) Inventor: **SUGIYAMA, Takanori**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM OPERATION EVALUATION METHOD, AND INFORMATION PROCESSING APPARATUS**

(57)    A computer acquires measurement data representing an execution result of executing, on a quantum computer, a quantum circuit where a quantum gate sequence including a first quantum gate is repeated N times, determines, from a first matrix representing an ideal value of the quantum gate sequence, a period of k such that a k-th power of the first matrix yields an identity matrix, generates a linear approximation function that linearly approximates an influence of an error, which the quantum computer has with respect to the first quantum gate, on the measurement data by approximating repetition of the quantum gate sequence using a matrix exponential of a first transformation result obtained by transforming the error using the first matrix, the N, and the period, and estimates the error using the linear approximation function and the measurement data, where each of N and K is an integer of one or more.

FIG. 1

**Description**

FIELD

The embodiments discussed herein relate to a computer program, a quantum operation evaluation method, and an information processing apparatus.

BACKGROUND

A quantum gate type quantum computer performs various quantum operations on qubits. The quantum computer initializes the qubits, applies quantum gates to the qubits, and measures the values of the qubits. Quantum computers are implemented on physical platforms based on superconducting quantum circuits, semiconductor quantum dots, diamond nitrogen-vacancy (NV) centers, nuclear magnetic resonance (NMR) molecules, and others.

In general, an implemented quantum computer has errors where the effects of quantum operations deviate from the ideal ones. A user may evaluate the errors in the quantum operations, and perform a calibration to adjust the values of control parameters within the quantum computer, on the basis of the evaluation result. For example, the quantum computer may have control parameters for adjusting the durations, amplitudes, waveforms, and others of drive pulses to be applied to qubits. Adjusting the values of the control parameters may improve the accuracy of the quantum operations.

Note that the measurement values of qubits are obtained after plural types of quantum operations are performed on the qubits. Therefore, it is not easy to directly evaluate the error in each individual quantum operation. Quantum tomography is one of techniques used to estimate errors in quantum operations. The quantum tomography conducts an experiment that involves repeatedly obtaining measurement values from a quantum computer while changing combinations of quantum operations. The quantum tomography then analyzes the experimental data to estimate the error in each individual quantum operation.

For quantum process tomography that evaluates errors in quantum gates, there is a technique that amplifies a minute error of a quantum gate by using an error amplification circuit that repeatedly applies the quantum gate. There is also a technique that estimates the crosstalk intensity between two qubits by synchronously performing spectral quantum process tomography on each of the two qubits. In addition, there is a technique that estimates errors in a measurement device by repeatedly applying a phase gate to qubits and measuring the quantum states while changing the phase, and then analyzing the experimental data. See, for example, the following literatures.

International Publication Pamphlet No. WO 2021/131695
International Publication Pamphlet No. WO 2022/151737
U.S. Patent Application Publication No. 2023/0306294

An error amplification circuit makes it easier to observe error components included in measurement values, which in turn improves the reliability of the evaluation results. On the other hand, since the error amplification circuit has a nonlinear amplification effect on errors, the data analysis may become more complex. As a result, the load of the data analysis may increase, and the numerical stability of the evaluation results may decrease.

For example, if the amplification effect of the error amplification circuit is approximated by a linear function, a singularity where a problematic value such as infinity is calculated may appear in the calculation of the linear function, depending on a quantum gate. In this case, it is difficult to evaluate the error of the quantum gate using a simple approximation method.

SUMMARY

In one aspect, the present disclosure aims to streamline the evaluation of errors in quantum gates.

In one aspect, there is provided a computer program that causes a computer to perform a process including: acquiring measurement data representing an execution result of executing, on a quantum computer, a quantum circuit in which a quantum gate sequence including a first quantum gate is repeated N times, the N being an integer of one or more; determining, from a first matrix representing an ideal value of the quantum gate sequence, a period of k such that a k-th power of the first matrix yields an identity matrix, the k being an integer of one or more; generating a linear approximation function that linearly approximates an influence of an error, which the quantum computer has with respect to the first quantum gate, on the measurement data by approximating repetition of the quantum gate sequence using a matrix exponential of a first transformation result obtained by transforming the error using the first matrix, the N, and the period; and estimating the error using the linear approximation function and the measurement data.

BRIEF DESCRIPTION OF DRAWINGS

FIG. 1 is a diagram for describing an information processing apparatus according to a first embodiment;
FIG. 2 illustrates an example of hardware of an information processing system according to a second embodiment;
FIG. 3 illustrates an example of an evaluation quantum circuit including an error amplification circuit;
FIG. 4 illustrates an example of combining quantum gates included in a quantum gate sequence;
FIG. 5 illustrates an example of an effect of a first quantum gate sequence on a generator error;
FIG. 6 illustrates an example of an effect of a second quantum gate sequence on a generator error;
FIG. 7 illustrates an example of correct and estimated values of a generator error;
FIG. 8 illustrates an example of a quantum gate having a singularity;
FIG. 9 illustrates an example of a generator of a quantum gate having a singularity;
FIG. 10 is a block diagram illustrating an example of the functions of an information processing apparatus;
FIG. 11 illustrates an example of setup data.
FIG. 12 illustrates an example of experimental data and evaluation data;
FIG. 13 is a first flowchart illustrating an example procedure for quantum operation evaluation;
FIG. 14 is a second flowchart illustrating an example procedure for the quantum operation evaluation;
FIG. 15 is the second flowchart (continuation) illustrating the example procedure for the quantum operation evaluation; and
FIG. 16 illustrates an example of a pseudo-program for determining the period of a quantum gate.

DESCRIPTION OF EMBODIMENTS

Hereinafter, embodiments will be described with reference to the drawings.

(a) First Embodiment

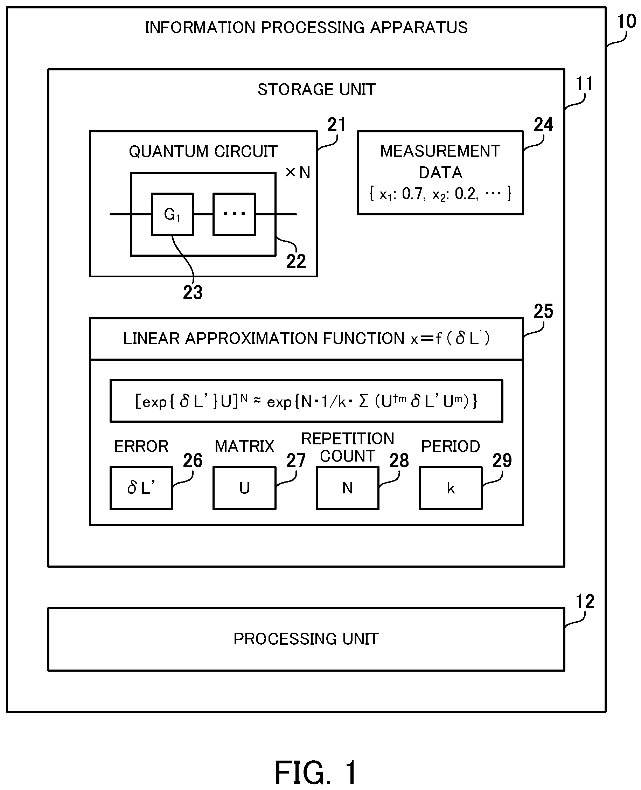

FIG. 1 is a diagram for describing an information processing apparatus according to a first embodiment. The information processing apparatus 10 of the first embodiment evaluates the implementation accuracy of quantum operations performed by a quantum computer using quantum tomography. The information processing apparatus 10 may be a so-called classical computer. The information processing apparatus 10 may be a client apparatus or a server apparatus. The information processing apparatus 10 may be referred to as a quantum operation evaluation apparatus.
The information processing apparatus 10 includes a storage unit 11 and a processing unit 12. The storage unit 11 may be a volatile semiconductor memory such as a random access memory (RAM). Alternatively, the storage unit 11 may be a non-volatile storage device such as a hard disk drive (HDD) or a flash memory.
The processing unit 12 is, for example, a processor such as a central processing unit (CPU), a graphics processing unit (GPU), or a digital signal processor (DSP). However, the processing unit 12 may include an electronic circuit such as an application specific integrated circuit (ASIC) or a field programmable gate array (FPGA). The processor executes, for example, programs stored in a memory such as RAM. The processor may be referred to as processor circuitry. A set of processors may be referred to as a multiprocessor or simply as a "processor". Further, a plurality of processing steps to be described later may be executed by different processors.
The storage unit 11 stores measurement data 24. The measurement data 24 indicates the execution results of executing a quantum circuit 21 on a quantum computer. The quantum computer that executes the quantum circuit 21 is the target for evaluating implementation accuracy. The information processing apparatus 10 may be connected to the quantum computer, and may read out measurement values from the quantum computer. The information processing apparatus 10 may receive the measurement data 24 from another information processing apparatus connected to the quantum computer. Further, the information processing apparatus 10 may sequentially read out the measurement values from the quantum computer while performing the data analysis described below.
The quantum circuit 21 is a quantum computation model that describes quantum operations on one or more qubits using quantum gates. The quantum circuit 21 repeats a quantum gate sequence 22 including a quantum gate 23 N times. N is an integer of one or more and indicates the number of repetitions 28 (hereinafter, the number of repetitions is referred to as a repetition count). Since the quantum circuit 21 amplifies error components, the quantum circuit 21 may be referred to as an error amplification circuit. Typically, N may be an integer of two or more. The information processing apparatus 10 may use the execution results of different quantum circuits corresponding to different values of N including N = 1, such as N = 1, 3, 5, and ....
The quantum gate sequence 22 may include a quantum gate other than the quantum gate 23. The quantum gate sequence 22 may execute two or more quantum gates in series. The quantum gate 23 is the target for evaluating its implementation accuracy. Examples of the quantum gate 23 include a 180-degree rotation gate, a 90-degree rotation gate, and a 45-degree rotation gate. The quantum computer has an error 26, which represents a deviation from an ideal value, with respect to the quantum gate 23. The ideal value indicates an ideal effect on the quantum state represented by a qubit. The error 26 may be referred to as an implementation error.

The error 26 is unknown and is defined by a variable. The quantum circuit 21 amplifies the error 26 through repetitions of the quantum gate sequence 22. The quantum gate sequence 22 may include two or more quantum gates (hereinafter, referred to as evaluation target quantum gates) whose errors are unknown and are to be evaluated. In addition, the quantum gate sequence 22 may include one or more quantum gates (hereinafter, referred to as non-evaluation target quantum gates) whose errors are known and are not to be evaluated. The information processing apparatus 10 may assume that the errors of the non-evaluation target quantum gates are zero or a constant value.

Even with the same qubit initialization method, the same types of quantum gates, and the same measurement method, the quantum computer probabilistically obtains measured values. Therefore, the measurement data 24 represents, for example, a probability distribution that lists the occurrence probabilities of a plurality of possible values that the qubits are able to take. The information processing apparatus 10 may cause the quantum computer to conduct a plurality of trials each of which involves initializing the qubits, executing the quantum gate sequence 22 N times, and measuring the values of the qubits. The information processing apparatus 10 may calculate the occurrence probability of each value by dividing the number of occurrences of the value by the number of trials.

The measurement data 24 may include a plurality of measurement results corresponding to different initialization methods and different measurement methods. In addition, the measurement data 24 may include a plurality of measurement results corresponding to different quantum gate sequences, and may include a plurality of measurement results corresponding to different repetition counts 28.

The processing unit 12 analyzes the measurement data 24 to estimate the error 26. To be precise, the influence of the error 26 on the measurement data 24 is nonlinear. However, in order to facilitate data analysis, the processing unit 12 generates a linear approximation function 25 that linearly approximates the influence of the error 26 on the measurement data 24. The linear approximation function 25 is represented as, for example, a matrix.

First, the processing unit 12 determines a period 29 from a matrix 27 that represents the ideal value of the quantum gate sequence 22. The period 29 is a period of k such that the k-th power of the matrix 27 yields the identity matrix. The period 29 may be said to be the smallest value among the k values satisfying the condition that the k-th power of the matrix 27 yields the identity matrix. k is an integer of one or more. The property of a matrix that, when raised to the k-th power, results in the identity matrix may be referred to as cyclicity. Many quantum gates, such as rotation gates, have cyclicity. Typically, k may be an integer of two or more. The information processing apparatus 10 may use execution results of different quantum circuits corresponding to different k values including k = 1, such as k = 1, 2, 4, 8, and ....

An ideal 180-degree rotation gate, when applied twice to a quantum state, returns the quantum state to its original state, and thus is represented as a matrix with period 2. An ideal 90-degree rotation gate is represented as a matrix with period 4. An ideal 45-degree rotation gate is represented as a matrix with period 8. In the case where the quantum gate sequence 22 includes two or more quantum gates, the matrix 27 may be calculated by sequentially combining the ideal values of these two or more quantum gates. The matrix 27 may be the product of matrices representing the ideal values of the quantum gates.

The processing unit 12 generates the linear approximation function 25. At this time, the processing unit 12 linearly approximates the amplification effect of the error 26 caused by repeating the quantum gate sequence 22. This linear approximation represents components of the amplification effect of the error 26 that are proportional to the repetition count 28. The processing unit 12 approximates the repetition of the quantum gate sequence 22 using the matrix exponential of the transformation result obtained by transforming the error 26 using the matrix 27, the repetition count 28, and the period 29. Here, the matrix exponential of a matrix X is defined as a square matrix obtained by summing, from a = 0 to infinity, the result of dividing the a-th power of the matrix X by the factorial of a.

For example, the effect of repetition of the quantum gate sequence 22 is approximately expressed as the matrix exponential of a matrix described below. The processing unit 12 sums, from m = 0 to k - 1, the product of the m-th power of the matrix 27, the error 26, and the m-th power of the adjoint matrix of the matrix 27. Here, the adjoint matrix of a matrix X is a matrix obtained by transposing the matrix X and taking its complex conjugate. The processing unit 12 then multiplies the above sum by the repetition count 28 and the reciprocal of the period 29. The matrix exponential of the resulting matrix is an approximation of the repetition of the quantum gate sequence 22.

This linear approximation utilizes the fact that the matrix 27 is a unitary matrix and has cyclicity. In addition, the linear approximation represents the quantum gate 23 having the error 26 as the product of a unitary matrix representing the ideal value of the quantum gate 23 and the matrix exponential of the error 26. The matrix logarithm of the matrix representing a quantum gate may be referred to as a generator or Lindbladian. The error 26 may be referred to as a generator error.

In the case where the quantum gate sequence 22 includes two or more quantum gates, the processing unit 12 may linearly approximate the amplification effect of the error 26 during one execution of the quantum gate sequence 22, using matrices representing the ideal values of the two or more quantum gates. The processing unit 12 may generate the linear approximation function 25 by multiplying a matrix that linearly approximates the effect of the combination of the two or more quantum gates by a matrix that linearly approximates the effect of repetition of the quantum gate sequence 22.

The processing unit 12 estimates the error 26 using the linear approximation function 25 and the measurement data 24. For example, the processing unit 12 extracts a first-order component proportional to the repetition count 28 from the measurement data 24. The linear approximation function 25 has the error 26 as an argument, and outputs a predicted value of the first-order component included in the measurement data 24. The processing unit 12 optimizes the error 26 that is input to the linear approximation function 25 so as to minimize the difference between the extracted first-order component and the output of the linear approximation function 25. For example, the processing unit 12 formulates this optimization problem as a quadratic programming problem with positive semidefinite constraints, and calculates the error 26 using a mathematical programming solver.

Here, a singularity may exist in the space to which the matrix representing the quantum operation of the quantum circuit 21 belongs. The singularity is a point indicating a matrix whose eigenvalues satisfy certain conditions. The singularity may be referred to as a critical point. For example, the singularity corresponds to a matrix with different eigenvalues for which the values of the exponential function with base e are the same. In the case where eigenvalues are complex numbers, the values of the exponential function calculated from different eigenvalues may be the same.

Depending on the types of quantum gates included in the quantum gate sequence 22, a matrix corresponding to a singularity may appear. Any one of the quantum gates included in the quantum gate sequence 22 may independently correspond to a singularity, or a composite quantum gate may correspond to a singularity. Examples of a quantum gate corresponding to a singularity include rotation gates. Examples of such rotation gates include a 180-degree rotation gate, and a quantum gate including both a 180-degree rotation component and a 45-degree rotation component (for example, the product of a CX gate and a 90-degree rotation gate around the X axis). At a singularity, a problematic value such as division by zero may be calculated.

To address this, the processing unit 12 performs the linear approximation on the repetition of the quantum gate sequence 22 as described above, so that the influence of the singularity is suppressed. In a second embodiment, the processing unit 12 does not need to perform spectral decomposition of decomposing the matrix 27 into the sum of the products of eigenvalues and projection matrices. Therefore, even if there is a quantum gate corresponding to a singularity, it is possible to avoid abnormal operations involving eigenvalues. In this connection, the processing unit 12 may generate the linear approximation function 25 before acquiring the measurement data 24.

As described above, the information processing apparatus 10 according to the first embodiment acquires the measurement data 24 representing the execution result of executing, on the quantum computer, the quantum circuit 21 in which the quantum gate sequence 22 including the quantum gate 23 is repeated N times. The information processing apparatus 10 determines, from the matrix 27 representing the ideal value of the quantum gate sequence 22, the period 29, which is a period of k such that the k-th power of the matrix 27 yields the identity matrix.

The information processing apparatus 10 generates the linear approximation function 25 that linearly approximates the influence of the error 26, which the quantum computer has with respect to the quantum gate 23, on the measurement data 24, by approximating the repetition of the quantum gate sequence 22 using the matrix exponential of the transformation result obtained by transforming the error 26 using the matrix 27, the repetition count 28, and the period 29. The information processing apparatus 10 estimates the error 26 using the linear approximation function 25 and the measurement data 24.

The information processing apparatus 10 is able to efficiently estimate the error 26 through the quantum tomography. In addition, since the quantum circuit 21 that repeats the quantum gate sequence 22 is used, the information processing apparatus 10 is able to amplify the minute error 26 of the quantum gate 23, thereby improving the accuracy of estimating the error 26 from the measurement data 24. Further, the user is able to adjust the values of the control parameters of the quantum computer on the basis of the estimated error 26, thereby improving the accuracy of the quantum operations of the quantum computer.

In addition, since the linear approximation function 25 is used, the information processing apparatus 10 does not need to perform nonlinear data analysis with high complexity, which reduces the load of data analysis and improves the numerical stability of an estimation result of the error 26. In addition, by utilizing the fact that the matrix 27 is a unitary matrix and has cyclicity, the information processing apparatus 10 is able to linearly approximate the effect of repetition without performing spectral decomposition. Therefore, it is possible to complete the approximate calculation while avoiding the influence of singularities. Therefore, the linear approximation is applicable to a wider variety of quantum gates.

In particular, the information processing apparatus 10 is able to efficiently estimate errors in various types of quantum gates having cyclicity, such as 180-degree rotation gates, 90-degree rotation gates, and 45-degree rotation gates. In addition, the information processing apparatus 10 does not need to use a different approximation method depending on whether the matrix 27 corresponds to a singularity, thereby simplifying the approximate calculation. In addition, the information processing apparatus 10 does not need to perform spectral decomposition with a high load, which allows for a reduction in the amount of calculation.

(b) Second Embodiment

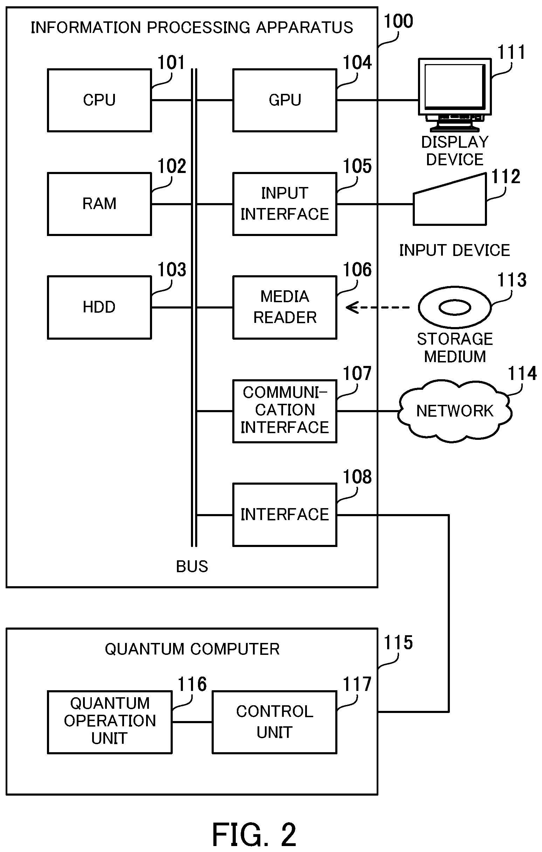

FIG. 2 illustrates an example of hardware of an information processing system according to a second embodiment. The information processing system according to the second embodiment includes an information processing apparatus 100 and a quantum computer 115. The information processing apparatus 100 evaluates the accuracy of quantum operations performed by the quantum computer 115 through quantum tomography. The information processing apparatus 100 performs a calibration to adjust the values of control parameters of the quantum computer 115 so as to improve the accuracy. The information processing apparatus 100 corresponds to the information processing apparatus 10 of the first embodiment.

The information processing apparatus 100 includes a CPU 101, a RAM 102, an HDD 103, a GPU 104, an input interface 105, a media reader 106, a communication interface 107, and an interface 108. These units are connected to a bus. The CPU 101 corresponds to the processing unit 12 of the first embodiment. The RAM 102 or the HDD 103 corresponds to the storage unit 11 of the first embodiment.

The CPU 101 is a processor that executes program instructions. The CPU 101 loads a program and data stored in the HDD 103 into the RAM 102 and executes the program. The information processing apparatus 100 may include a plurality of processors.

The RAM 102 is a volatile semiconductor memory that temporarily stores a program executed by the CPU 101 and data used by the CPU 101 during processing. The information processing apparatus 100 may include a volatile memory of a type other than RAM.

The HDD 103 is a non-volatile storage device that stores software programs such as an operating system (OS), middleware, and application software, and data. The information processing apparatus 100 may include another type of non-volatile storage device such as a flash memory or a solid state drive (SSD).

The GPU 104 performs image processing in cooperation with the CPU 101, and outputs images to a display device 111 connected to the information processing apparatus 100. The display device 111 is, for example, a cathode ray tube (CRT) display, a liquid crystal display, an organic electro luminescence (EL) display, or a projector. Another type of output device such as a printer may be connected to the information processing apparatus 100.

The GPU 104 may be used as a general purpose computing on graphics processing unit (GPGPU). The GPU 104 is able to execute programs in accordance with instructions from the CPU 101. The information processing apparatus 100 may include a volatile semiconductor memory other than the RAM 102 as a GPU memory.

The input interface 105 receives input signals from an input device 112 connected to the information processing apparatus 100. The input device 112 is, for example, a mouse, a touch panel, or a keyboard. A plurality of input devices may be connected to the information processing apparatus 100.

The media reader 106 is a reading device that reads a program and data stored in a storage medium 113. The storage medium 113 is, for example, a magnetic disk, an optical disc, or a semiconductor memory. Magnetic disks include a flexible disk (FD) and an HDD. Optical discs include a compact disc (CD) and a digital versatile disc (DVD). The media reader 106 copies a program and data read from the storage medium 113 to another storage medium such as the RAM 102 or the HDD 103. The read program may be executed by the CPU 101.

The storage medium 113 may be a portable storage medium. The storage medium 113 may be used for distribution of programs and data. The storage medium 113 and the HDD 103 may be referred to as computer-readable storage media.

The communication interface 107 communicates with other information processing apparatuses via the network 114. The communication interface 107 may be a wired communication interface connected to a wired communication device such as a switch or a router, or may be a wireless communication interface connected to a wireless communication device such as a base station or an access point.

The interface 108 is connected to the quantum computer 115. The interface 108 transmits commands to the quantum computer 115 in response to instructions from the CPU 101. The interface 108 receives data from the quantum computer 115 and writes the received data to the RAM 102 or the HDD 103.

The quantum computer 115 includes a quantum operation unit 116 and a control unit 117. The quantum operation unit 116 includes a plurality of qubits. The quantum operation unit 116 performs quantum operations such as initialization of qubits, application of quantum gates to qubits, and measurement of qubits in response to instructions from the control unit 117. The quantum operations change the quantum states represented by the qubits. The behavior of the quantum operations is adjusted by the values of the control parameters given from the control unit 117.

The control unit 117 receives commands from the information processing apparatus 100. A calibration command includes the names of control parameters and the values of the control parameters. The control unit 117 inputs the values of the control parameters to the quantum operation unit 116 in response to the calibration command. Examples of the control parameters include the durations, amplitudes, waveforms, and others of drive pulses to be applied to the qubits. Changing the values of the control parameters changes the accuracy of the quantum operations.

In addition, the control unit 117 instructs the quantum operation unit 116 to perform quantum operations in response to quantum operation commands. In addition, the control unit 117 reads out measurement values generated by the measurement of qubits in response to measurement value acquisition commands, and transmits the measurement values to the information processing apparatus 100.

In general, quantum information processing includes quantum computation, quantum simulation, quantum communication, quantum cryptography, quantum sensing, and others. Examples of a physical platform for the quantum information processing include superconducting quantum circuits, semiconductor quantum dots, diamond NV centers, NMR molecules, neutral atoms, trapped ions, photons, and others. A typical quantum information processing protocol based on a quantum circuit uses three types of quantum operations: initialization, quantum gates, and measurement.

Quantum operations implemented on the quantum computer 115 have errors, which indicate deviations from ideal quantum operations. To improve the accuracy of the quantum operations, the information processing apparatus 100 evaluates and calibrates the quantum computer 115. The evaluation involves estimating the errors in the quantum operations. The calibration involves changing the values of control parameters on the basis of the error information so as to reduce the errors. The information processing apparatus 100 may repeat the evaluation and calibration.

The information processing apparatus 100 evaluates the quantum operations using quantum tomography. The information processing apparatus 100 collects the measurement values of the qubits from the quantum computer 115 while changing combinations of initialization, quantum gates, and measurement. The information processing apparatus 100 analyzes the experimental data, which associates each trial combination with the measurement values, to estimate the errors in the quantum operations. In this connection, the quantum tomography enables the simultaneous estimation of errors of a plurality of quantum gates.

The information processing apparatus 100 generates a quantum circuit that includes an error amplification circuit in which the same quantum gate sequence is repeated a plurality of times, and causes the quantum computer 115 to execute the quantum circuit. The repetition count may be, for example, 16 times, 128 times, 1024 times, or another. Errors of the quantum gates included in the quantum gate sequence are amplified through the error amplification circuit, which increases the error components contained in the measurement values and thus enhances the evaluation accuracy. Examples of the quantum tomography technique using an error amplification circuit include gate-set tomography (GST), idle tomography (IT), and Hamiltonian error amplifying tomography (HEAT).

GST is described in, for example, the following non-patent literature. Erik Nielsen, John King Gamble, Kenneth Rudinger, Travis Scholten, Kevin Young and Robin Blume-Kohout, "Gate Set Tomography", the open journal for quantum science, volume 5, page 557, October 2021.

HEAT is described in, for example, the following non-patent literature. Neereja Sundaresan, Isaac Lauer, Emily Pritchett, Easwar Magesan, Petar Jurcevic and Jay M. Gambetta, "Reducing Unitary and Spectator Errors in Cross Resonance with Optimized Rotary Echoes", PRX Quantum of the American Physical Society, Volume 1, page 020318, December 2020.

An error amplification circuit is described in the following non-patent literatures. Gabriel O. Samach, Ami Greene, Johannes Borregaard, Matthias Christandl, Joseph Barreto, David K. Kim, Christopher M. McNally, Alexander Melville, Bethany M. Niedzielski, Youngkyu Sung, Danna Rosenberg, Mollie E. Schwartz, Jonilyn L. Yoder, Terry P. Orlando, Joel I-Jan Wang, Simon Gustavsson, Morten Kjaergaard and William D. Oliver, "Lindblad Tomography of a Superconducting Quantum Processor", Physical Review Applied of the American Physical Society, Volume 18, page 064056, December 2022.

Yanwu Gu, Rajesh Mishra, Berthold-Georg Englert and Hui Khoon Ng, "Randomized Linear Gate-Set Tomography", PRX Quantum of the American Physical Society, Volume 2, page 030328, August 2021.

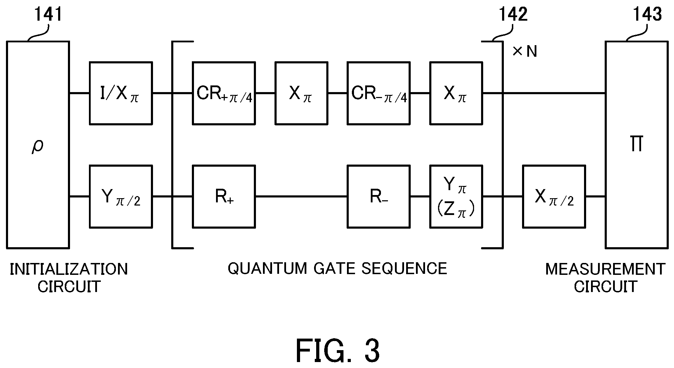

FIG. 3 illustrates an example of an evaluation quantum circuit including an error amplification circuit. This quantum circuit includes an initialization circuit 141, a quantum gate sequence 142, and a measurement circuit 143. The initialization circuit 141 initializes one or more qubits to generate a desired quantum state. The quantum gate sequence 142 includes one or more quantum gates. The error amplification circuit repeats the quantum gate sequence 142 in series N times. The measurement circuit 143 measures the values of the qubits.

A non-repetitive quantum gate may be included between the initialization circuit 141 and the quantum gate sequence 142. Similarly, a non-repetitive quantum gate may be included between the quantum gate sequence 142 and the measurement circuit 143. In FIG. 3, an X gate is a rotation gate that rotates around the X-axis, a Y gate is a rotation gate that rotates around the Y-axis, and a Z gate is a rotation gate that rotates around the Z-axis. A CR gate is a cross-resonance gate. An R gate is a rotation gate that rotates by a fixed angle.

The quantum tomography collects experimental data while changing combinations of the quantum gate sequence 142, the repetition count N, the initialization circuit 141, and the measurement circuit 143. The quantum gate sequence 142 includes one or more evaluation target quantum gates that are targets for error evaluation. The quantum gate sequence 142 may include one or more non-evaluation target quantum gates that are not targets for error evaluation.

The ideal effects of the evaluation target quantum gates and non-evaluation target quantum gates are known. Errors of the evaluation target quantum gates in the quantum computer 115 are unknown. Errors of the non-evaluation target quantum gates in the quantum computer 115 may be known or unknown. In the latter case, the quantum tomography may assume that the errors of the non-evaluation target quantum gates are zero or fixed values.

If the effect of the error amplification circuit on the errors of quantum gates is to be defined precisely, a highly-nonlinear numerical optimization problem needs solving. This may increase the load of experimental data analysis and decrease the stability of the solution search. To avoid these, the information processing apparatus 100 linearly approximates the effect of the error amplification circuit and formulates the quantum gate error search as a quadratic programming problem with positive semidefinite constraints. The quadratic programming problem with positive semidefinite constraints is a numerical optimization problem that optimizes a quadratic function under linear constraints, and involves matrices with non-negative eigenvalues. The method employed in the second embodiment may be referred to as robust Lindbladian tomography (RLT).

The following describes quantum tomography calculations according to the second embodiment. The effect of a quantum gate acting on a d-dimensional quantum system is described by a linear map given by Formula (1). This linear map is a map from a (d × d)-dimensional complex space to another (d × d)-dimensional complex space and is a trace-preserving and completely positive map. Here, let G denote the representation matrix of the linear map of Formula (1) under the orthonormal basis given by Formula (2). This orthonormal basis is a set of $d^2$ members $B_\alpha$ that are mutually orthogonal and each have norm 1. The component $G_{\alpha\beta}$ at the $\alpha$-th row and $\beta$-th column of the matrix G is calculated using the members $B_\alpha$ of the orthonormal basis corresponding to the $\alpha$-th row, the members $B_\beta$ of the orthonormal basis corresponding to the $\beta$-th column, and the trace, as in Formula (3).

$$\mathcal{G} : \mathbf{C}^{d\times d} \rightarrow \mathbf{C}^{d\times d} \qquad (1)$$

$$\mathbf{B} = \{B_\alpha\}_{\alpha=0}^{d^2-1} \qquad (2)$$

$$G_{\alpha\beta} = \mathrm{Tr}[B_\alpha^\dagger \mathcal{G}(B_\beta)] \qquad (3)$$

With respect to the quantum gate specified by Formula (1), there exists a linear map that satisfies the relationship given by Formula (4) via the exponential map exp. This linear map may be referred to as a generator (Lindbladian). Let L denote the representation matrix of the linear map satisfying Formula (4), the relationship of Formula (5) using a matrix exponential function e holds between the representation matrix G of the quantum gate and the representation matrix L of the generator. The equation $G = e^L$ is expanded as in Formula (5), where $L^{\mathrm{ideal}}$ denotes the representation matrix of the ideal value of the generator and $\delta L$ denotes the representation matrix of the error of the generator.

$$\mathcal{G} = \exp(\mathcal{L}) \qquad (4)$$

$$G = e^L = e^{L^{\mathrm{ideal}}+\delta L} \qquad (5)$$

In the case where the error of a quantum gate is amplified through the error amplification circuit, the error of the generator corresponding to the matrix logarithm of the quantum gate is easier to analyze than the error of the quantum gate itself. This is because, as the error accumulates, a rotation may occur in the qubit, thereby creating a possibility that the angular deviation is not exactly proportional to the repetition count N. Therefore, in the second embodiment, the information processing apparatus 100 estimates the generator error from experimental data. Since the ideal value of the generator is known, knowing the generator error enables determining the actual G in the quantum computer 115. To simplify the description, the following may make no distinction between a linear map and its representation matrix. For example, a quantum gate may be denoted as G, a generator as L, and a generator error as $\delta L$.

To prepare an error amplification circuit, a set of quantum gates $I_g$, which is represented by Formula (6), is provided by the user. The quantum gates included in the set $I_g$ are identified by unique numbers. Among the $n_g$ different quantum gates, the first $n_{g,1}$ quantum gates are evaluation target quantum gates, and the remaining quantum gates are non-evaluation target quantum gates.

$$I_g = \{\mathcal{G}_i\}_{i=1}^{n_g} \qquad (6)$$

A quantum gate sequence that forms the error amplification circuit is a quantum circuit in which one or more (typically two or more) quantum gates among the quantum gates included in the set I$_g$ are arranged in series. A quantum gate sequence a is defined as in Formula (7), where m denotes the length of the quantum gate sequence. Each element on the right-hand side of Formula (7) indicates a number identifying a quantum gate included in the set I$_g$. The same type of quantum gate may appear two or more times within the quantum gate sequence a.

$$a = \{i_1, i_2, \ldots, i_{m-1}, i_m\} \qquad (7)$$

Let G(a) denote a composite quantum gate corresponding to the entire effect of the quantum gate sequence a. G(a) is expanded as in Formula (8). The product of three or more matrices is calculated from right to left. Here, let N denote a repetition count for the error amplification circuit. Then, a quantum gate corresponding to the entire effect of the error amplification circuit is denoted by G(a)$^N$.

$$G(a) = G_{i_m} G_{i_{m-1}} \cdots G_{i_2} G_{i_1}$$
$$= e^{L_{i_m}^{\mathrm{ideal}} + \delta L_{i_m}} e^{L_{i_{m-1}}^{\mathrm{ideal}} + \delta L_{i_{m-1}}} \cdots e^{L_{i_2}^{\mathrm{ideal}} + \delta L_{i_2}} e^{L_{i_1}^{\mathrm{ideal}} + \delta L_{i_1}} \qquad (8)$$

The $n_{g,1}$ generator errors δL, as represented by Formula (9), are estimation targets. To collect measurement values obtained under various conditions, a set of quantum gate sequences a and a set of repetition counts N, as represented by Formula (10), are provided by the user. As the quantum gate sequences, $n_a$ different quantum gate sequences are provided. As the repetition counts, $n_N$ different repetition counts are provided for each quantum gate sequence.

$$\{\delta L_i\}_{i=1}^{n_{g,1}} \qquad (9)$$

$$\mathcal{A} = \{a_i\}_{i=1}^{n_a}, \ \mathcal{N}_i = \{N_{i,j}\}_{j=1}^{n_N} \qquad (10)$$

Different repetition counts N and N' provided for the same quantum gate sequence satisfy the condition of Formula (11). That is, the effect of an error-free ideal quantum gate sequence repeated N times matches the effect of the error-free ideal quantum gate sequence repeated N' times. Therefore, it is easy to extract amplified error components from measurement values obtained under the different repetition counts.

$$[G(a)^{\mathrm{ideal}}]^N = [G(a)^{\mathrm{ideal}}]^{N'}, \ N, N' \in \mathcal{N}_i \qquad (11)$$

In addition, for each quantum gate sequence, a set of pairs of initialization ρ and measurement Π, as represented by Formula (12), is provided by the user. This set includes $n_{t,i}$ pairs of initialization ρ and measurement Π. Therefore, the quantum computer 115 generates the initial quantum state using the initialization ρ, repeatedly executes the quantum gate sequence a N times, and obtains measurement values with the measurement Π. The quantum computer 115 performs this experiment for all combinations of a, N, and (ρ, Π).

$$\mathcal{T}_i = \{(\rho_{i,k}, \Pi_{i,k})\}_{k=1}^{n_{t,i}} \qquad (12)$$

Let |X>> denote the vectorization of a matrix X with respect to the basis B. The probability of obtaining a measurement value x in each experiment is calculated as in Formula (13). The matrix X is an element in the (d × d)-dimensional complex space, and the vector |X>> is an element in the d$^2$-dimensional complex space. Hereafter, i may be used as an identifier identifying a quantum gate sequence a, j as an identifier identifying a repetition count N, and k as an identifier identifying a pair of initialization and measurement (ρ, Π). The measurement values are probabilistically obtained due to the nature of quantum computation. Therefore, the quantum computer 115 obtains $n_{i,j,k}$ measurement values as samples for each (i, j, k).

$$p_x(i, j, k) = \langle\langle \Pi_{i,k,x} | G(a)^{N_j} | \rho_{i,k} \rangle\rangle \qquad (13)$$

Let $f_{i,j,k,x}$ denote the frequency of obtaining the measurement value x. The frequency distribution represented by Formula (14) is calculated for each (i, j, k). The frequency $f_{i,j,k,x}$ is calculated by dividing the number of samples with the measurement value x by $n_{i,j,k}$.

$$\boldsymbol{f}_{i,j,k} = \{f_{i,j,k,x}\}_x \qquad (14)$$

After the experimental phase in which frequency distributions are collected as described above, the information processing apparatus 100 executes a data processing phase to analyze experimental data representing the frequency distributions. The data processing phase includes step #1 of extracting amplified components from the experimental data, step #2 of linearly approximating the effect of the error amplification circuit, and step #3 of solving a numerical optimization problem defined using the results of steps #1 and #2. However, steps #1 and #2 may be executed in reverse order, and step #2 may be executed before the experimental phase. Further, the information processing apparatus 100 may omit step #2 by reusing the effect of the error amplification circuit calculated in the past.

In step #1, the information processing apparatus 100 extracts a first-order component proportional to the repetition count N from the experimental data. The experimental data contains constant components independent of the repetition count N, the first-order component proportional to the repetition count N, and second-order and higher-order components with respect to the repetition count N. The ideal value of a generator corresponds to a constant component. A generator error amplified by the error amplification circuit corresponds to the first-order component. The following describes how to extract the first-order component through extrapolation.

The information processing apparatus 100 selects and fixes a combination of a quantum gate sequence a, a pair of initialization and measurement ($\rho$, $\Pi$), and a measurement value x. The information processing apparatus 100 then expands the probability $p_x(i, j, k)$ into a series in terms of the repetition counts N, as in Formula (15). The probability $p_x(i, j, k)$ is a probability at which the measurement value x is obtained through the experiment under (i, j, k), and $h_\nu$ denotes a v-th order expansion coefficient. Because of the decomposition accuracy, the information processing apparatus 100 approximates the series expansion up to the infinite order given by Formula (15), by a finite series sum up to a ($n_N$ - 1)th order.

$$p_x(i, j, k) = \sum_{\nu=0}^{\infty} h_\nu (N_j)^\nu \qquad (15)$$

Formula (16) represents a vector of probabilities $p_x(i, j, k)$ collected for $n_N$ repetition counts, where T denotes a transposition. Using a Vandermonde matrix V associated with the repetition counts N as defined by Formula (17), the finite series sum is expressed as in Formula (18). The Vandermonde matrix V is a matrix that has $n_N$ row vectors corresponding to $n_N$ repetition counts, which are each a row vector of powers of the repetition count N from the 0th power to the ($n_N$ - 1)th power. The coefficient vector h in Formula (18) is a vector of expansion coefficients $h_\nu$ from the 0th order to the ($n_N$ - 1)th order.

$$\tilde{\boldsymbol{p}}_{i,k,x}^T = (p_x(i, j, k))_{j=1}^{n_N} \qquad (16)$$

$$V(\mathcal{N}_i) = \begin{bmatrix} 1 & N_1 & (N_1)^2 & \cdots & (N_1)^{n_N-1} \\ 1 & N_2 & (N_2)^2 & \cdots & (N_2)^{n_N-1} \\ \vdots & \vdots & \vdots & \ddots & \vdots \\ 1 & N_{n_N} & (N_{n_N})^2 & \cdots & (N_{n_N})^{n_N-1} \end{bmatrix} \qquad (17)$$

$$\tilde{\boldsymbol{p}}_{i,k,x} \approx V\boldsymbol{h} \qquad (18)$$

In the case where the $n_N$ repetition counts are mutually different, the Vandermonde matrix V becomes an invertible matrix. The coefficient vector h is calculated using the inverse matrix of the Vandermonde matrix V, as in Formula (19). In the experiment using the quantum computer 115, the frequency $f_{i,j,k,x}$ corresponding to the estimated value of the probability $p_x(i, j, k)$ is measured. Therefore, the information processing apparatus 100 uses the frequency $f_{i,j,k,x}$, instead of

the probability $p_x(i, j, k)$. Formula (20) represents a vector of the frequencies $f_{i,j,k,x}$ collected for the $n_N$ repetition counts. The estimated value $h^{est}$ of the coefficient vector is calculated as in Formula (21).

$$\boldsymbol{h} \approx V^{-1}\tilde{\boldsymbol{p}}_{i,k,x} \qquad (19)$$

$$\tilde{\boldsymbol{f}}_{i,k,x}^{T} = \left(f_{i,j,k,x}\right)_{j=1}^{n_N} \qquad (20)$$

$$\boldsymbol{h}^{\mathrm{est}} = V^{-1}\tilde{\boldsymbol{f}}_{i,k,x} \qquad (21)$$

In this way, the information processing apparatus 100 calculates the expansion coefficients from the 0th order to the ($n_N$ - 1)th order, from the measured frequencies $f_{i,j,k,x}$. Alternatively, the information processing apparatus 100 may calculate the expansion coefficients using another method instead of the above-described method using the Vandermonde matrix V. For example, the information processing apparatus 100 may perform polynomial approximation using a least squares method.

The second element of the coefficient vector h is the first-order component proportional to the repetition count N. The information processing apparatus 100 extracts the first-order component while changing the measurement value x. The information processing apparatus 100 calculates the coefficient vector $h^{est}_1(i, k)$ by collecting the first-order components obtained with respect to the same (i, k) and different measurement values x. The information processing apparatus 100 calculates this coefficient vector $h^{est}_1(i, k)$ for all (i, k).

In step #2, the information processing apparatus 100 parameterizes the errors of the $n_{g,1}$ generators that are evaluation targets among the errors of the $n_g$ generators, collectively into a parameter v. The parameter v is a vector. The transformation from the $n_{g,1}$ generator errors to the parameter v may be any predefined affine transformation and may be defined using a matrix. This parameterization is defined so as to be invertible, in order to estimate the $n_{g,1}$ generator errors from an optimal value of the parameter v as described later.

For each (i, k), the information processing apparatus 100 linearly approximates the effect of the error amplification circuit and generates a matrix $C_{i,k}$ representing the components proportional to the repetition count N. The product of the matrix $C_{i,k}$ and the parameter v represents the influence of the errors of the evaluation target generators on the first-order component of the experimental data.

In addition, the information processing apparatus 100 vectorizes the errors of the non-evaluation target generators among the errors of the $n_g$ generators, in the same manner as for the parameter v. This vectorization uses the same transformation as for the errors of the evaluation target generators. The information processing apparatus 100 applies the matrix $C_{i,k}$ to this vector to generate a vector $b_{i,k}$. The vector $b_{i,k}$ represents the influence of the errors of the non-evaluation target generators on the first-order component of the experimental data. Since the errors of the non-evaluation target generators are provided by the user, the elements of the vector $b_{i,k}$ are calculated as specific numerical values. The linear approximation of the effect of the error amplification circuit will be discussed later.

In step #3, the information processing apparatus 100 generates an objective function F(v) given by Formula (22), using the coefficient vector $h^{est}_1(i, k)$ generated in step #1 and the matrix $C_{i,k}$ and vector $b_{i,k}$ generated in step #2, where $W_{i,k}$ denotes a weight matrix that is set for (i, k) by the user. The information processing apparatus 100 calculates a parameter $v^{est}$ that minimizes the value of the objective function F(v), as in Formula (23). The information processing apparatus 100 then returns the parameter $v^{est}$ back to the errors of the evaluation target generators.

$$F(\boldsymbol{v}) = \frac{1}{2}\sum_{i,k} ||C_{i,k}\boldsymbol{v} + \boldsymbol{b}_{i,k} - \boldsymbol{h}_1^{\mathrm{est}}(i, k)||_{W_{i,k}}^2 \qquad (22)$$

$$\boldsymbol{v}^{\mathrm{est}} = \mathrm{argmin}_{\boldsymbol{v}:\mathrm{physical}}F(\boldsymbol{v}) \qquad (23)$$

The numerical optimization problem that solves Formula (23) is least-squares fitting with physical constraints. The parameter $v^{est}$ is searched for such as to satisfy the physical constraints of the generator errors. Since the parameter v is resulted from an affine parameterization of the generator errors, the physical constraints of the parameter v are represented by linear positive semidefinite constraints. Furthermore, the objective function F(v) is a quadratic function of the parameter v. Therefore, this numerical optimization problem is formulated as a quadratic programming problem with positive semidefinite constraints, and is solved using a positive semidefinite programming solver.

The following describes the linear approximation in step #2. Consider n-by-n complex square matrices A, B, and P, as in Formula (24). The matrix A is diagonalizable and corresponds to the ideal value of a generator. The matrix A is decomposed by spectral decomposition, as represented by Formula (25), where V denotes a matrix containing the eigenvectors as column vectors, $\lambda$ denotes a diagonal matrix with the eigenvalues on the diagonal, $a_j$ denotes a complex number representing an eigenvalue, and $P_j$ denotes a projection matrix corresponding to the eigenvalue $a_j$. The matrix A is decomposed into the sum of the products of the eigenvalue $a_j$ and the projection matrix $P_j$.

$$A, B, P \in \mathbb{C}^{n \times n} \tag{24}$$

$$A = V \Lambda V^{-1} = \oplus_j a_j P_j \tag{25}$$

The projection matrix P satisfies Formula (26), where $\delta_{jk}$ denotes a Kronecker delta. $\delta_{jk}$ is one when j equals k, and $\delta_{jk}$ is zero when j and k are different. Therefore, the product of different projection matrices corresponding to different eigenvalues results in a zero matrix. On the other hand, the square of the same projection matrix results in the projection matrix itself.

$$P_j P_k = \delta_{jk} P_j \tag{26}$$

Using the eigenvalues $a_j$ and the projection matrices $P_j$ of the matrix A, six linear maps with respect to the matrix B are defined as in Formulas (27) to (32). $dcl_A$ indicates a decomposition to left with respect to the matrix A. $dcr_A$ indicates a decomposition to right with respect to the matrix A. $cml_A$ indicates a composition to left with respect to the matrix A.

$cmr_A$ indicates a composition to right with respect to the matrix A. $ssp_A$ indicates the sum of spectral projections with respect to the matrix A. $sspc_A$ indicates the sum of spectral projection complements with respect to the matrix A.

$$dcl_A(B) = \sum_{j,k} \ell_{jk} P_j B P_k \tag{27}$$

$$dcr_A(B) = \sum_{j,k} \ell_{kj} P_j B P_k \tag{28}$$

$$cml_A(B) = \sum_{j,k} \frac{1}{\ell_{jk}} P_j B P_k \tag{29}$$

$$cmr_A(B) = \sum_{j,k} \frac{1}{\ell_{kj}} P_j B P_k \tag{30}$$

$$ssp_A(B) = \sum_{i} P_i B P_i \tag{31}$$

$$sspc_A(B) = \sum_{i,j(i \neq j)} P_i B P_j \tag{32}$$

The coefficient used in Formulas (27) to (30) is defined as in Formula (33). In the case where the projection matrices $P_j$ and $P_k$ are identical, $l_{jk}$ is 1. In the case where the projection matrices $P_j$ and $P_k$ are different, $l_{jk}$ is calculated from

the eigenvalues $a_j$ and $a_k$ corresponding to the projection matrices $P_j$ and $P_k$. These six linear maps may be represented by matrices using an orthonormal basis in the (n × n)-dimensional complex space. The representation matrices of these six linear maps are $n^2$-by-$n^2$ matrices, as represented by Formula (34).

$$\ell_{jk} = \begin{cases} 1 & (j = k) \\ \frac{e^{a_j - a_k} - 1}{a_j - a_k} & (j \neq k) \end{cases} \tag{33}$$

$$\mathrm{dcl}_A, \mathrm{dcr}_A, \mathrm{cml}_A, \mathrm{cmr}_A, \mathrm{ssp}_A, \mathrm{sspc}_A \in \mathbb{C}^{n^2 \times n^2} \tag{34}$$

Using dcl of Formula (27), the matrix exponential of the sum of the matrices A and B is calculated as in Formula (35). The second term on the right-hand side is the second-order or higher-order component with respect to the matrix B. Therefore, the matrix exponential of the sum of the matrices A and B is linearly approximated as in the first term on the right-hand side. In addition, using dcr of Formula (28), the matrix exponential of the sum of the matrices A and B is calculated as in Formula (36). Therefore, the matrix exponential of the sum of the matrices A and B is also linearly approximated as in the first term on the right-hand side.

$$e^{A+B} = e^{\mathrm{dcl}_A(B)} e^A + O(||B||^2) \tag{35}$$

$$e^{A+B} = e^A e^{\mathrm{dcr}_A(B)} + O(||B||^2) \tag{36}$$

Furthermore, using cml of Formula (29), the product of the matrix exponentials of the matrices A and B is calculated as in Formula (37). Thus, the product of the matrix exponentials of the matrices A and B is linearly approximated as in the first term on the right-hand side. In addition, using cmr of Formula (30), the product of the matrix exponentials of the matrices B and A is calculated as in Formula (38). Therefore, the product of the matrix exponentials of the matrices B and A is also linearly approximated as in the first term on the right-hand side.

$$e^B e^A = e^{A+\mathrm{cml}_A(B)} + O(||B||^2) \tag{37}$$

$$e^A e^B = e^{A+\mathrm{cmr}_A(B)} + O(||B||^2) \tag{38}$$

Using the linear maps of Formulas (27) to (30), the effect of the composite quantum gate formed by combining the quantum gates $G_1$ and $G_2$ is approximated as in Formula (39). Here, $L^{\mathrm{ideal}}$ is a composite generator corresponding to the matrix logarithm of the ideal value of the composite quantum gate and is defined as in Formula (40).

$$\begin{aligned} G_2 G_1 &= e^{L_2^{\mathrm{ideal}} + \delta L_2} e^{L_1^{\mathrm{ideal}} + \delta L_1} \\ &\approx e^{L^{\mathrm{ideal}} + cmr_{L^{\mathrm{ideal}}}(dcr_{L_1^{\mathrm{ideal}}}(\delta L_1)) + cml_{L^{\mathrm{ideal}}}(dcl_{L_i^{\mathrm{ideal}}}(\delta L_2))} \end{aligned} \tag{39}$$

$$L^{\mathrm{ideal}} = \ln(e^{L_2^{\mathrm{ideal}}} e^{L_1^{\mathrm{ideal}}}) \tag{40}$$

Therefore, the generator error $\delta L_1$ of the quantum gate $G_1$ changes through the composite quantum gate, as represented by Formula (41). In Formula (41), the change in $\delta L_1$ is linearly approximated using the linear maps $dcr_L$ and $cmr_L$. Similarly, the generator error $\delta L_2$ of the quantum gate $G_2$ changes through the composite quantum gate, as represented by Formula (42). In Formula (42), the change in $\delta L_2$ is linearly approximated using the linear maps $dcl_L$ and $cml_L$. Formula (43) is the representation matrix of the change in $\delta L_1$ given by Formula (41). Formula (44) is the representation matrix of the change in $\delta L_2$ given by Formula (42).

$$\delta L_1 \mapsto cmr_{L^{\text{ideal}}}\left(dcr_{L_1^{\text{ideal}}}(\delta L_1)\right) \qquad (41)$$

$$\delta L_2 \mapsto cml_{L^{\text{ideal}}}\left(dcl_{L_2^{\text{ideal}}}(\delta L_2)\right) \qquad (42)$$

$$\text{cmr}_{L^{\text{ideal}}} \cdot \text{dcr}_{L_1^{\text{ideal}}} \qquad (43)$$

$$\text{cml}_{L^{\text{ideal}}} \cdot \text{dcl}_{L_2^{\text{ideal}}} \qquad (44)$$

In the case where the quantum gate sequence includes three or more quantum gates, the information processing apparatus 100 combines the quantum gates one by one, in order from the first to the last quantum gate. The information processing apparatus 100 first combines the first and second quantum gates. Then, the information processing apparatus 100 combines the third quantum gate with the resulting composite quantum gate. As a result of repeatedly combining the quantum gates, the information processing apparatus 100 generates a composite quantum gate corresponding to the entire quantum gate sequence. By doing so, the changes in the generator errors through the quantum gate sequence are linearly approximated.

After that, the information processing apparatus 100 calculates the effect of repetition of the quantum gate sequence. N repetitions of a quantum gate are defined by Formula (45). The composite quantum gate obtained by the combining of the quantum gate sequence may be expressed in the form of $e^{A+B}$. Assuming that c satisfying mod(nA) = cA exists, the N repetitions of this composite quantum gate are defined as in Formula (46) using ssp and sspc of Formulas (31) and (32). Here, c is a constant independent of the repetition count N. The first term on the right-hand side is the first-order component with respect to the matrix B. The second term on the right-hand side is the second-order or higher-order component with respect to the matrix B.

$$G^N = \left[e^{L^{\text{ideal}}+\delta L}\right]^N \qquad (45)$$

$$\left[e^{A+B}\right]^N = e^{c \cdot A + c \cdot \text{sspc}_A(B) + N \cdot \text{ssp}_A(B)} + O(||B||^2) \qquad (46)$$

Thus, the generator error δL of the quantum gate G changes through the N repetitions, as represented by Formula (47). In Formula (47), the change in δL is linearly approximated using the linear maps ssp and sspc. The first term on the right-hand side represents a component that is not amplified through the N repetitions. The second term on the right-hand side represents the first-order component proportional to the repetition count N. Formula (48) represents the representation matrix of the effect that does not amplify δL during the N repetitions. Formula (49) represents the representation matrix of the effect that amplifies δL during the N repetitions.

$$\delta L \mapsto c \cdot sspc_{L^{\text{ideal}}}(\delta L) + N \cdot ssp_{L^{\text{ideal}}}(\delta L) \qquad (47)$$

$$\text{sspc}_{L^{\text{ideal}}} \qquad (48)$$

$$\text{ssp}_{L^{\text{ideal}}} \qquad (49)$$

Lastly, for the error amplification circuit in which the quantum gate sequence is repeated N times, the information processing apparatus 100 calculates the effect on the generator errors by integrating the effect of the combination of the quantum gates and the effect of the repetition of the quantum gate sequence. For example, the information processing apparatus 100 generates the representation matrix of the effect of the combination and the representation matrix of the effect of the repetition in the manner described above, and multiplies the representation matrix of the effect of the combination by the representation matrix of the effect of the repetition from the left. As the representation matrix of the effect of the repetition, for example, the matrix of Formula (49) that is proportional to the repetition count N is used.

In the manner described above, the information processing apparatus 100 linearly approximates the amplification effect of the error amplification circuit on the generator errors. The amplification effect calculated here is an effect in the generator space. In numerical optimization using the objective function F(v), the information processing apparatus 100 transforms an effect in the generator space into an effect in the space of the probability distributions of measurement values.

Here, the information processing apparatus 100 generates a transformation matrix by rearranging the elements of the representation matrices of the initialization ρ and measurement Π used in the experiment, and multiplies the representation matrix of the error amplification circuit by the transformation matrix from the left. The representation matrices of the initialization ρ and measurement Π used here contain known or assumed errors related to ρ and Π, and may sometimes be referred to as model values. By doing so, the matrix $C_{i,k}$ included in the objective function F(v) is calculated. In addition, by applying the matrix $C_{i,k}$ to the errors of the non-evaluation target generators, the vector $b_{i,k}$ is calculated.

The following describes an improvement in the linear approximation of step #2. The linear approximation of the effect of the quantum gate sequence uses the linear map cml of Formula (29) and the linear map cmr of Formula (30). These linear maps cml and cmr include the reciprocal of the coefficient $l_{jk}$ defined by Formula (33).

Here, there exists a quantum gate that has eigenvalues $a_j$ and $a_k$ whose generators have different ideal values and in which the $a_j$-power and $a_k$-power of e yield the same value. In the case where the eigenvalues $a_j$ and $a_k$ are complex numbers, the $a_j$-power and $a_k$-power of e may become identical as represented by Formula (50).

Examples of such a quantum gate are rotation gates having a 180-degree rotation component, such as 180-degree rotation gates. The X180 gate, the Y180 gate, the Z180 gate, the CNOT gate, the CZ gate, and the SWAP gate have a 180-degree rotation component. The CNOT·XI90 gate and the CNOT·YI90 gate have a 45-degree rotation component in addition to the 180-degree rotation component. The CNOT·XI90 gate is a quantum gate that executes a CNOT gate followed by an XI90 gate. The CNOT·YI90 gate is a quantum gate that executes a CNOT gate followed by a YI90 gate.

In this case, $l_{jk}$ equals 0, its reciprocal is infinite, and the values of the linear maps cml and cmr are not calculated. This indicates that at the points corresponding to the above generators in the generator space, the differential maps of the exponential maps have a zero eigenvalue. Such a point in the generator space may be referred to as a singularity or a critical point. It may also be said that at a singularity, the linear approximation of the effect of the quantum gate sequence breaks down. In the case where the quantum gate sequence includes a quantum gate corresponding to a singularity or in the case where a composite quantum gate corresponding to a singularity is generated during the combining process, the above-described linear approximation method fails to calculate the effect of the error amplification circuit.

$$e^{a_j - a_k} - 1 = 0 \iff e^{a_j} = e^{a_k} \qquad (50)$$

To deal with this, in the second embodiment, the information processing apparatus 100 changes the definition of generator errors to avoid performing the linear approximation using the linear maps cml and cmr. As the definition of the quantum gate G, the information processing apparatus 100 uses Formula (51) instead of Formula (5). The second matrix exponential on the right-hand side is the matrix exponential of the ideal value of the generator, and is a unitary matrix. A unitary matrix is a matrix U with the property defined by Formula (52). The product of a unitary matrix and its adjoint matrix results in the identity matrix. The first matrix exponential on the right-hand side is the matrix exponential of the generator error δL'.

$$G = e^{\delta L'} e^{L^{\text{ideal}}} \qquad (51)$$

$$U^\dagger U = U U^\dagger = I \qquad (52)$$

The information processing apparatus 100 estimates the generator error δL' defined by Formula (51) for an evaluation target quantum gate. The generator error δL' is different from the generator error δL defined by Formula (5). According to the definition of Formula (51), an estimated value different from that obtained with Formula (5) is obtained. However, the generator errors δL and δL' are both indicators for the error of the quantum gate G. The user may use the calculated generator error δL' as it is in order to calibrate the quantum computer. Alternatively, the user may transform the generator error δL' into the generator error δL for use in the calibration of the quantum computer.

The information processing apparatus 100 modifies Formula (39) to Formula (53) for combining the quantum gates G1 and G2 included in the quantum gate sequence. This combining does not use any linear map dcl, dcr, cml, or cmr. A matrix $U_1$ is a unitary matrix representing the ideal value of the quantum gate $G_1$ and corresponds to the matrix exponential of the ideal value of the generator $L_1$. A matrix $U_2$ is a unitary matrix representing the ideal value of the quantum gate $G_2$ and corresponds to the matrix exponential of the ideal value of the generator $L_2$. The transformations in Formula (53) utilize the fact that the matrices $U_1$ and $U_2$ are unitary matrices.

$$G_2 G_1 = e^{\delta L_2'} e^{L_2^{\text{ideal}}} e^{\delta L_1'} e^{L_1^{\text{ideal}}} = e^{\delta L_2'} U_2 e^{\delta L_1'} U_1$$
$$= e^{\delta L_2'} U_2 e^{\delta L_1'} U_2^{\dagger} U_2 U_1 = e^{\delta L_2'} e^{U_2 \delta L_1' U_2^{\dagger}} U_2 U_1 \qquad (53)$$

The composite quantum gate represented by Formula (53) is approximated as in Formula (54). The approximation of Formula (54) utilizes the fact that the generator errors $\delta L_1'$ and $\delta L_2'$ are very small compared to the matrices $U_1$ and $U_2$. The ideal value of the composite quantum gate is the product of the matrices $U_1$ and $U_2$. The error of the composite quantum gate is expressed using the generator errors $\delta L_1'$ and $\delta L_2'$ and the matrix $U_2$. The error of the composite quantum gate is represented as the matrix exponential of what is obtained by transforming the generator error $\delta L_1'$ using the matrix $U_2$ and its adjoint matrix and adding the generator error $\delta L_2'$ to the transformation result.

$$G_2 G_1 \approx e^{\delta L_2' + U_2 \delta L_1' U_2^{\dagger}} U_2 U_1 \qquad (54)$$

The quantum gates included in the quantum gate sequence are combined regardless of whether a matrix corresponding to a singularity appears during the calculation process for the combining. Since neither the linear map cml nor cmr is used, it is possible to continue combining the quantum gates even if a matrix corresponding to a singularity appears. The information processing apparatus 100 obtains a composite quantum gate corresponding to the entire quantum gate sequence by applying the linear approximation of Formulas (53) to (54) to the quantum gate sequence, sequentially from the first to the last quantum gate thereof.

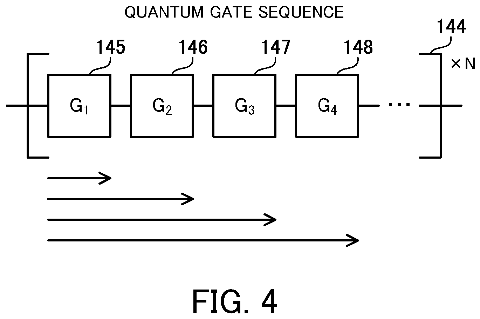

FIG. 4 illustrates an example of combining quantum gates included in a quantum gate sequence. A quantum gate sequence 144 includes quantum gates 145, 146, 147, and 148 in order from the beginning. First, the information processing apparatus 100 multiplies the quantum gate 145 by the quantum gate 146 to combine them. More specifically, the information processing apparatus 100 multiplies the representation matrix of the quantum gate 145 by the representation matrix of the quantum gate 146 from the left.

Then, the information processing apparatus 100 multiplies the composite quantum gate of the quantum gates 145 and 146 by the quantum gate 147 to combine them. More specifically, the information processing apparatus 100 multiplies the representation matrix of the composite quantum gate by the representation matrix of the quantum gate 147 from the left. Then, the information processing apparatus 100 multiplies the composite quantum gate of the quantum gates 145, 146, and 147 by the quantum gate 148 to combine them. More specifically, the information processing apparatus 100 multiplies the representation matrix of the composite quantum gate by the representation matrix of the quantum gate 148 from the left. In this manner, the information processing apparatus 100 obtains the composite quantum gate representing the entire quantum gate sequence 144.

After that, the information processing apparatus 100 obtains a matrix representing the effect of the execution of N repetitions of the composite quantum gate representing the entire quantum gate sequence. The combining result of the quantum gate sequence is expressed in the form of $e^{\delta L'} U$, where U denotes a unitary matrix representing the ideal value of the composite quantum gate and $\delta L'$ denotes the generator error of the composite quantum gate.

Here, it is assumed that the unitary matrix U has cyclicity as represented in Formula (55). When the unitary matrix U having cyclicity is multiplied k times, it results in the identity matrix. The cyclicity indicates that, when an ideal quantum gate is continuously applied to a qubit k times, the qubit returns to its original quantum state. Many quantum gates have cyclicity, such as rotation gates with fixed rotation angles. A composite quantum gate obtained by combining two or more quantum gates having cyclicity also has cyclicity. Therefore, the assumption of cyclicity of the error amplification circuit is reasonable.

$$U^k = I \qquad (55)$$

The smallest positive integer k satisfying Formula (55) is the period of the unitary matrix U. The period of an ideal 180-degree rotation gate is 2. The period of an ideal 90-degree rotation gate is 4. The period of an ideal 45-degree rotation gate is 8. It is assumed that the repetition count N is a multiple of k. For example, in the case where the quantum gate sequence includes a 45-degree rotation gate and the period of the composite quantum gate is expected to be 8, the repetition count N is set to 8, 16, 24, 32, ..., or the like. Note that the period k is different from the above-described identifier identifying a pair of initialization and measurement $(\rho, \Pi)$.

The information processing apparatus 100 according to the second embodiment performs approximate calculation for the repetition of a composite quantum gate by utilizing the fact that the ideal value of the composite quantum gate is a unitary matrix and has cyclicity. This approximate calculation does not use any linear map dcl, dcr, cml, or cmr, as in the case of combining quantum gates. The repetition of the composite quantum gate is executed regardless of whether the composite quantum gate has a singularity. Since the linear maps cml and cmr are not used, it is possible to calculate the effect of the repetition even if the composite quantum gate has a singularity.

The information processing apparatus 100 uses an approximate formula given by Formula (56) instead of Formula (46). The linear map $ssp_U$ is the linear map defined by Formula (31) for the unitary matrix U. Based on the assumption that the unitary matrix U has cyclicity, Formula (56) is expanded into Formula (57). The matrix logarithm of the effect of repetition is proportional to the repetition count N and inversely proportional to the period k. The matrix logarithm of the effect of the repetition is proportional to the sum of m-th-order terms (m = 1, ..., k) of the unitary matrix. Due to the cyclicity, this formula holds even if the range of m is replaced with 0 to k - 1.

$$\left[ e^{\delta L'} U \right]^N \approx e^{N \cdot ssp_U (\delta L')} \tag{56}$$

$$\left[ e^{\delta L'} U \right]^N \approx e^{N \frac{1}{k} \Sigma_{m=1}^{k} (U^\dagger)^m \delta L' U^m} = e^{N \frac{1}{k} \Sigma_{m=0}^{k-1} (U^\dagger)^m \delta L' U^m} \tag{57}$$

Here, the derivation of Formula (57) will be described. From the unitarity of U, the generator $L^{ideal}$ is an anti-Hermitian matrix that satisfies $(L^{ideal})^{-1} = -L^{ideal}$. By selecting a Hermitian matrix as a representation basis, the representation matrix of a quantum gate is reduced to a real matrix. From the terminology of group theory, the period k may be referred to as the order of the unitary matrix U.

The unitary matrix, the Hermitian matrix, and the anti-Hermitian matrix are matrices that are diagonalizable, and may be spectrally decomposed as represented by Formula (25). In Formula (25), the eigenvalue $a_j$ satisfies uniqueness, and the projection matrix $P_j$ satisfies orthogonality and decomposability. The uniqueness means that eigenvalues $a_j$ corresponding to different projection matrices $P_j$ have different values. The orthogonality means the property given by Formula (26). The decomposability means that the sum of all the projection matrices $P_j$ becomes the identity matrix.

In the case where the matrix A is a normal matrix, the matrix A is unitarily diagonalizable. The unitary matrix, Hermitian matrix, and anti-Hermitian matrix are all normal matrices. As a consequence, the projection matrix $P_j$ satisfies the Hermitian property given by Formula (58). The Hermitian property is a property that a certain matrix is equal to its adjoint matrix. A projection satisfying the Hermitian property is called an orthogonal projection, and indicates that the space before the projection and the space after the projection are orthogonal to each other. The projection matrices obtained through the spectral decomposition of the unitary matrix U satisfy the Hermitian property. In addition, the projection matrices obtained through the spectral decomposition of the ideal generator $L^{ideal}$ also satisfy the Hermitian property. In the description of the derivation of the approximate formula, the linear maps given by Formulas (59) and (60) are introduced.

$$P_j = P_j^\dagger \tag{58}$$

$$sum_{A,n}(B) = \sum_{m=0}^{n-1} A^m B (A^\dagger)^m \tag{59}$$

$$rsd_{A,n_1,n_2} = sum_{A,n_1} - \frac{n_1}{n_2} sum_{A,n_2} \tag{60}$$

Here, for the purpose of the description, the repetition count N is generalized to an arbitrary positive integer. Then, the repetition count N is expressed by Formula (61). Here, q is the quotient obtained by dividing N by k, and r is the remainder thereof. When $U_1 = U_2 = U$ and $\delta L_1' = \delta L_2' = \delta L$ are substituted into Formulas (53) and (54), Formula (62) is obtained. Similarly, when $G_2 = G$ and $G_1 = G^2$ are substituted in combination with the case of N = 2, Formula (63) is obtained for N = 3.

$$N = qk + r \tag{61}$$

$$\left[e^{\delta L'}U\right]^2 \approx e^{\delta L' + U\delta L'U^\dagger}U^2 \tag{62}$$

$$\left[e^{\delta L'}U\right]^3 = e^{\delta L'}U\left[e^{\delta L'}U\right]^2 \approx e^{\delta L'}Ue^{\delta L' + U\delta L'U^\dagger}U^2 \tag{63}$$

$$\approx e^{\delta L' + U(\delta L' + U\delta L'U^\dagger)U^\dagger}UU^2 = e^{\delta L' + U\delta L'U^\dagger + U^2\delta L'(U^\dagger)^2}U^3$$

By repeating the above substitutions, an approximate formula represented by Formula (64) is obtained with respect to the repetition count N. Here, m is a non-negative integer. From the cyclicity of U, Formulas (65) and (66) hold. Therefore, Formula (64) is expanded into Formula (67) and further expanded into Formula (68). In this connection, in the case of r = 0 in Formula (67), the second term in the matrix exponential function on the right-hand side is regarded as 0. By substituting r = 0 into Formula (68), Formula (69) is obtained.

$$\left[e^{\delta L'}U\right]^N \approx e^{\Sigma_{m=0}^{N-1}U^m\delta L'(U^\dagger)^m}U^N \tag{64}$$

$$U^N = U^{qk+r} = \left[U^k\right]^q U^r = U^r \tag{65}$$

$$\sum_{m=0}^{N-1} U^m\delta L'(U^\dagger)^m = q\sum_{m=0}^{k-1} U^m\delta L'(U^\dagger)^m + \sum_{m=0}^{r-1} U^m\delta L'(U^\dagger)^m \tag{66}$$

$$\left[e^{\delta L'}U\right]^N \approx e^{q\Sigma_{m=0}^{k-1}U^m\delta L'(U^\dagger)^m + \Sigma_{m=0}^{r-1}U^m\delta L'(U^\dagger)^m}U^r \tag{67}$$

$$\left[e^{\delta L'}U\right]^N \approx e^{q\cdot sum_{U,k}(\delta L') + sum_{U,r}(\delta L')}U^r$$
$$= e^{qk\cdot\frac{1}{k}sum_{U,k}(\delta L') + sum_{U,r}(\delta L')}U^r \tag{68}$$
$$= e^{(qk+r)\cdot\frac{1}{k}sum_{U,k}(\delta L') + sum_{U,r}(\delta L') - \frac{r}{k}sum_{U,k}(\delta L')}U^r$$
$$= e^{N\cdot\frac{1}{k}sum_{U,k}(\delta L') + rsd_{U,r,k}(\delta L')}U^r$$

$$\left[e^{\delta L'}U\right]^N = e^{N\cdot\frac{1}{k}sum_{U,k}(\delta L')} \tag{69}$$

Formula (70) holds due to the cyclicity of U, and Formula (71) holds for any integer m. When m' = k - m, Formula (72) is obtained for the linear map $sum_{U,k}$. Therefore, Formula (57) is established from Formulas (69) and (72).

$$I = U^k = U^m U^{k-m} \tag{70}$$

$$U^m = (U^{k-m})^\dagger = (U^\dagger)^{k-m} \qquad (71)$$

$$sum_{U,k}(\delta L') = \sum_{m=0}^{k-1} U^m \delta L' (U^\dagger)^m = \sum_{m=0}^{k-1} (U^\dagger)^{k-m} \delta L' U^{k-m}$$

$$= \sum_{m'=1}^{k} (U^\dagger)^{m'} \delta L' U^{m'} = \sum_{m'=0}^{k-1} (U^\dagger)^{m'} \delta L' U^{m'} \qquad (72)$$

Next, the derivation of Formula (56) will be described. The following aims to rewrite the linear map $sum_{U,k}$ and the linear map $rsd_{U,r,k}$ included in Formula (68). The spectral decomposition of U is represented by Formula (73). Here, $\omega_j$ is an eigenvalue, and $Q_j$ is a projection matrix. Since U is a unitary matrix, the projection matrix $Q_j$ is a Hermitian matrix, and the eigenvalue $\omega_j$ has an absolute value of 1. In the case where the cyclicity as represented in Formula (55) is established, the sum of all the projection matrices $Q_j$ is expanded as in Formula (74), from the orthogonality and decomposability of the projection matrices $Q_j$. Therefore, the eigenvalue $\omega_j$ of the unitary matrix U is the k-th root of one as indicated in Formula (75).

$$U = \sum_j \omega_j Q_j \qquad (73)$$

$$\sum_j Q_j = I = U^k = \left( \sum_j \omega_j Q_j \right)^k = \sum_j (\omega_j)^k Q_j \qquad (74)$$

$$(\omega_j)^k = 1 \qquad (75)$$

Both the linear map $sum_{U,k}$ and the linear map $rsd_{U,r,k}$ include the linear map $sum_{U,n}$. The linear map $sum_{U,n}$ is defined as in Formula (76), and is expanded as in Formula (77). In order to calculate the sum of the series in Formula (77), $S_n$ is defined as in Formula (78). From the fact that the absolute value of the eigenvalue $\omega_j$ is one and the uniqueness of the eigenvalue $\omega_j$, the series in Formula (77) is calculated as in Formula (79).

$$sum_{U,n}(B) = \sum_{m=0}^{n-1} U^m B (U^\dagger)^m \qquad (76)$$

$$sum_{U,n}(B) = \sum_{m=0}^{n-1} \left( \sum_j (\omega_j)^m Q_j \right) B \left( \sum_{j'} (\overline{\omega}_{j'})^m Q_{j'} \right) \qquad (77)$$

$$= \sum_{j,j'} \left( \sum_{m=0}^{n-1} (\omega_j)^m (\overline{\omega}_{j'})^m \right) Q_j B Q_{j'} = \sum_{j,j'} \left( \sum_{m=0}^{n-1} (\omega_j \overline{\omega}_{j'})^m \right) Q_j B Q_{j'}$$

$$S_n(z) = \sum_{m=0}^{n-1} z^m = \begin{cases} N & (z = 1) \\ \frac{1-z^n}{1-z} & (z \neq 1) \end{cases} \qquad (78)$$

$$\sum_{m=0}^{n-1} (\omega_j \overline{\omega}_{j'})^m = S_n(\omega_j \overline{\omega}_{j'}) = \begin{cases} N & (j = j') \\ \frac{1-(\omega_j \overline{\omega}_{j'})^n}{1-\omega_j \overline{\omega}_{j'}} & (j \neq j') \end{cases} \qquad (79)$$

In the case of n = k, Formula (80) is established, and Formula (79) is simplified to Formula (81), where $\delta_{jj'}$ denotes the Kronecker delta. For general n, Formula (77) is represented as in Formula (82) and is expanded as in Formula (83). Therefore, the linear map $sum_{U,k}$ is represented as in Formula (84) using the linear map $ssp_U$. The linear map $sum_{U,r}$ is represented as in Formula (85) using the linear map $ssp_U$.

$$(\omega_j \overline{\omega}_{j'})^k = (\omega_j)^k (\overline{\omega}_{j'})^k = 1 \qquad (80)$$

$$S_k(\omega_j \overline{\omega}_{j'}) = \begin{cases} k & (j = j') \\ 0 & (j \neq j') \end{cases} = k\delta_{jj'} \qquad (81)$$

$$sum_{U,n}(B) = \sum_{j,j'} S_n(\omega_j \overline{\omega}_{j'}) Q_j B Q_{j'} \qquad (82)$$

$$sum_{U,n}(B) = n \cdot \sum_{j} Q_j B Q_j + \sum_{j,j'(j\neq j')} \frac{1-(\omega_j \overline{\omega}_{j'})^n}{1-\omega_j \overline{\omega}_{j'}} Q_j B Q_{j'}$$

$$= n \cdot ssp_U(B) + \sum_{j,j'(j\neq j')} \frac{1-(\omega_j \overline{\omega}_{j'})^n}{1-\omega_j \overline{\omega}_{j'}} Q_j B Q_{j'} \qquad (83)$$

$$sum_{U,k}(B) = k \cdot ssp_U(B) \qquad (84)$$

$$sum_{U,r}(B) = r \cdot ssp_U(B) + \sum_{j,j'(j\neq j')} \frac{1-(\omega_j \overline{\omega}_{j'})^r}{1-\omega_j \overline{\omega}_{j'}} Q_j B Q_{j'} \qquad (85)$$

The linear map $rsd_{U,r,k}$ is defined as in Formula (86), and is expanded as in Formula (87). Therefore, Formula (68) is rewritten as in Formula (88) using the spectral decomposition of the unitary matrix U.

$$rsd_{U,r,k} = sum_{U,r}(B) - \frac{r}{k} sum_{U,k}(B) \qquad (86)$$

$$rsd_{U,r,k} = r \cdot ssp_U(B) + \sum_{j,j'(j \neq j')} \frac{1 - (\omega_j \overline{\omega}_{j'})^r}{1 - \omega_j \overline{\omega}_{j'}} Q_j B Q_{j'} - \frac{r}{k} k \cdot ssp_U(B)$$

$$= \sum_{j,j'(j \neq j')} \frac{1 - (\omega_j \overline{\omega}_{j'})^r}{1 - \omega_j \overline{\omega}_{j'}} Q_j B Q_{j'} \qquad (87)$$

$$\left[ e^{\delta L'} U \right]^N \approx e^{N \frac{1}{k} k \cdot ssp_U(\delta L') + rsd_{U,r,k}(\delta L')} U^r$$

$$= e^{N \cdot ssp_U(\delta L') + rsd_{U,r,k}(\delta L')} U^r \qquad (88)$$

In the case where the generator error δL' is expressed in the basis that diagonalizes the unitary matrix U, the non-zero components of $ssp_U(\delta L')$ exist only in the diagonal blocks, and the non-zero components of $rsd_{U,r,k}(\delta L')$ exist only in the non-diagonal blocks. Therefore, in the generator error δL', the components of the diagonal blocks are amplified in proportion to the repetition count N, and the components of the non-diagonal blocks are not amplified. Therefore, the repetition of the composite quantum gate is linearly approximated as in Formula (56).

The linear map $rsd_{U,r,k}$, by its definition, may be calculated without performing spectral decomposition. The linear map $ssp_U$ may also be calculated from Formula (84) without performing spectral decomposition. In the second embodiment, neither the combining of the quantum gate nor the repetition of the composite quantum gate needs spectral decomposition. Therefore, the linear approximation is streamlined, and the numerical stability is improved.

In the repetition of a composite quantum gate, the information processing apparatus 100 does not need to determine whether the unitary matrix U has a singularity, or does not need to perform classification according to the presence or absence of a singularity. This is because the approximate formula of Formula (57) is usable for a variety of composite quantum gates with period k, and is not limited to a particular type of quantum gate, such as a 180-degree rotation gate.

This is because the linear map $ssp_U$ for the unitary matrix U is used. In the case where the unitary matrix U has no singularity, the linear map $ssp_L$ for the generator $L^{ideal}$ and the linear map $ssp_U$ for the unitary matrix U are equivalent. On the other hand, in the case where the unitary matrix U has a singularity, the linear maps $ssp_L$ and $ssp_U$ are not equivalent. By using the linear map $ssp_U$ for the unitary matrix U, it is possible to perform approximate calculation regardless of the presence or absence of a singularity.

Here, the difference between the linear maps $ssp_L$ and $ssp_U$ will be described. The spectral decomposition of the generator $L^{ideal}$ is expressed as in Formula (89). The unitary matrix U that is the matrix exponential of the generator $L^{ideal}$ is expressed as in Formula (90).

$$L^{ideal} = \sum_j a_j P_j \qquad (89)$$

$$U = e^{L^{ideal}} = \sum_j e^{a_j} P_j \qquad (90)$$

In the case where the set of eigenvalues of the generator $L^{ideal}$ satisfies Formula (91), the eigenvalues and projection matrices of the unitary matrix U correspond one-to-one with the eigenvalues and projection matrices of the generator $L^{ideal}$, and the relationship of Formula (92) holds. Therefore, the set of projection matrices of the unitary matrix U coincides with the set of projection matrices of the generator $L^{ideal}$, and the equality of Formula (93) holds.

$$e^{a_j} \neq e^{a_{j'}} \quad \text{if } j \neq j' \qquad (91)$$

$$\omega_j = e^{a_j}, \quad Q_j = P_j \qquad (92)$$

$$ssp_U = ssp_{L^{\mathrm{ideal}}} \qquad (93)$$

On the other hand, in the case where the set of eigenvalues of the generator $L^{\mathrm{ideal}}$ includes at least one pair that does not satisfy Formula (91), different eigenvalues of the generator $L^{\mathrm{ideal}}$ correspond to the same eigenvalue of the unitary matrix U, and Formula (90) does not represent spectral decomposition. In the case where the sets of projection matrices differ between the generator $L^{\mathrm{ideal}}$ and the unitary matrix U, the generator $L^{\mathrm{ideal}}$ is a singularity. At the singularity, the equality of Formula (93) does not hold.

The following describes numerical examples of the matrices used in the above-described calculations. Consider here a single-qubit system with d = 2. First, 2-by-2 matrices $\sigma_0$, $\sigma_1$, $\sigma_2$, and $\sigma_3$ called Pauli matrices are defined as in Formula (94). Using these matrices $\sigma_0$, $\sigma_1$, $\sigma_2$, and $\sigma_3$, a Pauli matrix basis given by Formula (95) is selected as the basis for the matrix representations of quantum gates and generators.

$$\sigma_0 = \begin{bmatrix} 1 & 0 \\ 0 & 1 \end{bmatrix}, \ \sigma_1 = \begin{bmatrix} 0 & 1 \\ 1 & 0 \end{bmatrix}, \ \sigma_2 = \begin{bmatrix} 0 & -i \\ i & 0 \end{bmatrix}, \ \sigma_3 = \begin{bmatrix} 1 & 0 \\ 0 & -1 \end{bmatrix} \qquad (94)$$

$$B_\alpha = \sigma_\alpha / \sqrt{2}, \ \alpha \in \{0, 1, 2, 3\} \qquad (95)$$

In addition, as the basis for the vector representations of quantum gates and generators, a basis S that is defined by a set of $S_1$ to $S_{16}$ of Formulas (96) to (109) is selected. In Formulas (96) to (109), the overline on B means a complex conjugate, and the product operator denotes a tensor product.

$$S_1 = \frac{i}{\sqrt{2}}(B_0 \otimes \overline{B}_1 - B_1 \otimes \overline{B}_0) \qquad (96)$$

$$S_2 = \frac{i}{\sqrt{2}}(B_0 \otimes \overline{B}_2 - B_2 \otimes \overline{B}_0) \qquad (97)$$

$$S_3 = \frac{i}{\sqrt{2}}(B_0 \otimes \overline{B}_3 - B_3 \otimes \overline{B}_0) \qquad (98)$$

$$S_4 = B_1 \otimes \overline{B}_1, \ \ S_5 = B_2 \otimes \overline{B}_2, \ \ S_6 = B_3 \otimes \overline{B}_3 \qquad (99)$$

$$S_7 = \frac{i}{\sqrt{2}}(B_1 \otimes \overline{B}_2 + B_2 \otimes \overline{B}_1) \qquad (100)$$

$$S_8 = \frac{i}{\sqrt{2}}(B_1 \otimes \overline{B}_3 + B_3 \otimes \overline{B}_1) \qquad (101)$$

$$S_9 = \frac{i}{\sqrt{2}}(B_2 \otimes \overline{B}_3 + B_3 \otimes \overline{B}_2) \qquad (102)$$

$$S_{10} = \frac{i}{\sqrt{2}}(B_1 \otimes \overline{B}_2 - B_2 \otimes \overline{B}_1) \qquad (103)$$

$$S_{11} = \frac{i}{\sqrt{2}}(B_1 \otimes \overline{B}_3 - B_3 \otimes \overline{B}_1) \qquad (104)$$

$$S_{12} = \frac{i}{\sqrt{2}}(B_2 \otimes \overline{B}_3 - B_3 \otimes \overline{B}_2) \qquad (105)$$

$$S_{13} = B_0 \otimes \overline{B}_0 \qquad (106)$$

$$S_{14} = \frac{1}{\sqrt{2}}(B_0 \otimes \overline{B}_1 + B_1 \otimes \overline{B}_0) \qquad (107)$$

$$S_{15} = \frac{1}{\sqrt{2}}(B_0 \otimes \overline{B}_2 + B_2 \otimes \overline{B}_0) \qquad (108)$$

$$S_{16} = \frac{1}{\sqrt{2}}(B_0 \otimes \overline{B}_3 + B_3 \otimes \overline{B}_0) \qquad (109)$$

Consider here two quantum gates. A quantum gate $G_1$ is a rotation gate that rotates by 180 degrees around the X-axis and may be denoted by X180 gate. A quantum gate $G_2$ is a rotation gate that rotates by 90 degrees around the Z-axis and may be denoted by Z90 gate. The quantum gate $G_1$ is an evaluation target quantum gate, and its generator error is unknown. The quantum gate $G_2$ is a non-evaluation target quantum gate, and its generator error is assumed to be zero.

The information processing apparatus 100 sets two trial quantum gate sequences: one containing only the quantum gate $G_1$, and the other containing the quantum gates $G_1$ and $G_2$ in order. The ideal effect of the quantum gate $G_1$ on a quantum state $\rho$ is given by Formula (110). The ideal effect of the quantum gate $G_2$ on the quantum state $\rho$ is given as in Formula (111). The representation matrices of the quantum gates $G_1$ and $G_2$ under the above Pauli matrix basis B are given as in Formula (112). The quantum gate $G_1$ corresponds to a singularity, whereas the quantum gate $G_2$ does not correspond to a singularity. The composite quantum gate $G_2 G_1$ corresponds to a singularity.

$$\mathcal{G}_1(\rho) = e^{-i\frac{\pi}{2}\sigma_1}\rho e^{i\frac{\pi}{2}\sigma_1} \qquad (110)$$

$$\mathcal{G}_2(\rho) = e^{-i\frac{\pi}{4}\sigma_3}\rho e^{i\frac{\pi}{4}\sigma_3} \qquad (111)$$

$$G_1 = \begin{bmatrix} 1 & 0 & 0 & 0 \\ 0 & 1 & 0 & 0 \\ 0 & 0 & -1 & 0 \\ 0 & 0 & 0 & -1 \end{bmatrix}, \quad G_2 = \begin{bmatrix} 1 & 0 & 0 & 0 \\ 0 & 0 & -1 & 0 \\ 0 & 1 & 0 & 0 \\ 0 & 0 & 0 & 1 \end{bmatrix} \qquad (112)$$

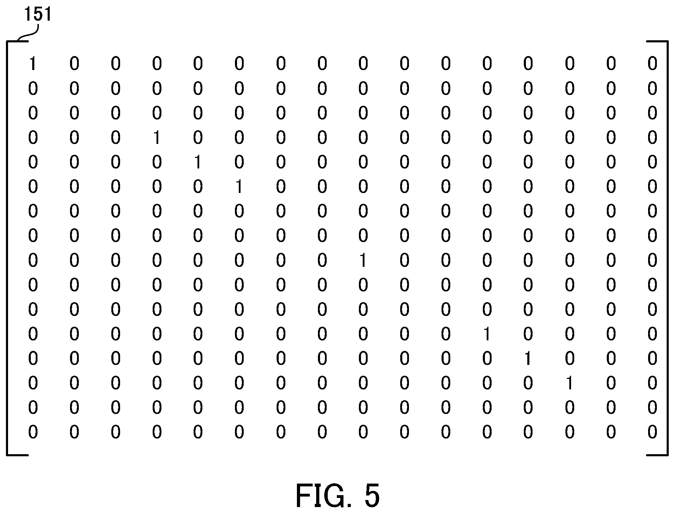

FIG. 5 illustrates an example of an effect of a first quantum gate sequence on a generator error. A matrix 151 represents the effect of the quantum gate sequence containing only the quantum gate $G_1$ on the generator error through the combining of quantum gates and the repetition of the quantum gate sequence, and indicates components proportional to the repetition count N. The matrix 151 is a representation matrix under the above-described basis S.

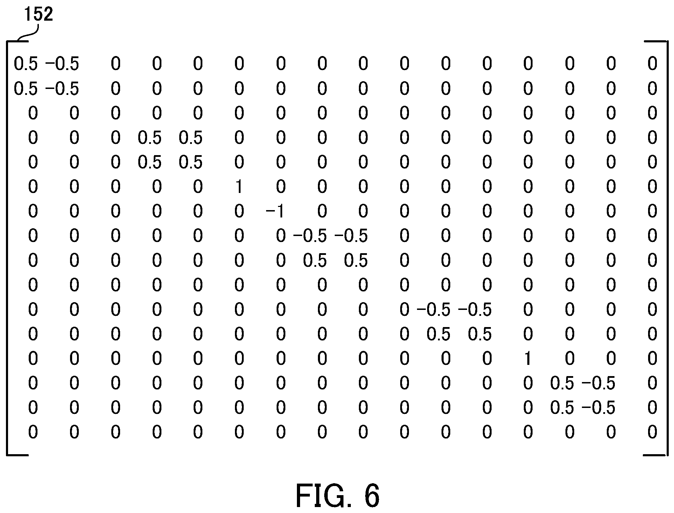

FIG. 6 illustrates an example of an effect of a second quantum gate sequence on a generator error. A matrix 152 represents the effect of the quantum gate sequence containing the quantum gates $G_1$ and $G_2$ on the generator error through the combining of the quantum gates and the repetition of the quantum gate sequence, and indicates components proportional to the repetition count N. The matrix 152 is a representation matrix under the above-described basis S.

In addition, the information processing apparatus 100 selects five different repetition counts N for trials: 2, 4, 8, 16, and 32 times. The information processing apparatus 100 applies these five repetition counts N commonly to the above two quantum gate sequences.

Furthermore, the information processing apparatus 100 prepares four types of initializations $\rho$: x0, y0, z0, and z1. Here, x0 indicates a quantum state corresponding to an eigenvector with eigenvalue +1 of $\sigma_1$. y0 indicates a quantum state corresponding to an eigenvector with eigenvalue +1 of $\sigma_2$. z0 indicates a quantum state corresponding to an eigenvector with eigenvalue +1 of $\sigma_3$. z1 indicates a quantum state corresponding to an eigenvector with eigenvalue -1 of $\sigma_3$. The information processing apparatus 100 applies these four types of initializations $\rho$ commonly to the above two quantum gate sequences.

The information processing apparatus 100 also prepares three types of measurements $\Pi$: x, y, and z. Here, x indicates a projective measurement corresponding to $\sigma_1$. y indicates a projective measurement corresponding to $\sigma_2$. z indicates a projective measurement corresponding to $\sigma_3$. The information processing apparatus 100 applies these three types of measurements $\Pi$ commonly to the above two quantum gate sequences. Therefore, in this example, the total number of combinations of a quantum gate sequence a, a repetition count N, an initialization $\rho$, and a measurement $\Pi$ is calculated as 120 (= $2 \times 5 \times 4 \times 3$).

Since a quantum computer probabilistically obtains measurement results, the information processing apparatus 100 obtains a sample a plurality of times for each combination, and generates the above-described experimental data. However, in this numerical simulation, instead of using the quantum computer 115, the information processing apparatus 100 generates the generator error of the quantum gate $G_1$ using pseudo-random numbers. Using this generator error, the information processing apparatus 100 generates the experimental data representing a true probability distribution.

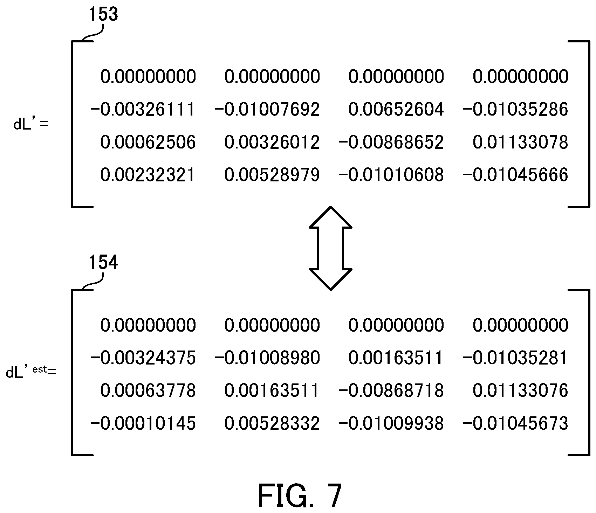

FIG. 7 illustrates an example of correct and estimated values of a generator error. A matrix 153 represents the correct value of the generator error of the quantum gate $G_1$. The matrix 153 is a representation matrix under the above-described Pauli matrix basis B. The information processing apparatus 100 generates the matrix 153 using pseudo-random numbers. A matrix 154 represents a generator error of the quantum gate $G_1$ estimated from the matrices 151 and 152 and the experimental data. The matrix 154 is a representation matrix under the above-described Pauli matrix basis B. A comparison of the matrix 153 with the matrix 154 reveals that many matrix components are estimated with high accuracy. However, since only the above-described two quantum gate sequences are used, some components of the generator error are not sufficiently amplified, which affects some matrix components.

Next, an example of a quantum gate having a singularity other than the 180-degree rotation gate will be described. The CNOT·XI90 gate is a two-input quantum gate with an order of k = 8. The ideal effect of a quantum gate acting on a d-dimensional quantum system is represented as in Formula (113) using a d-by-d Hermitian matrix H. The matrix H is called a Hamiltonian. The matrix representation of the map represented by Formula (113) is the unitary matrix U.

$$\mathcal{U}(\rho) = e^{-iH}\rho e^{iH} \qquad (113)$$

Hereinafter, a two-qubit system corresponding to d = 4 will be considered. The Hamiltonian $H_{CX}$ of the controlled NOT gate is given by Formula (114). The Hamiltonian $H_{XI90}$ of the XI90 gate is given by Formula (115). In Formulas (114) and (115), the product operator denotes a tensor product. Each of I, X, and Z is one of the Pauli matrices defined in Formula (116). Here, as the representation basis B for the matrix representations of quantum gates and generators, the tensor product of normalized Pauli matrices is used as represented in Formula (117).

$$H_{CX} = \frac{\pi}{4}(Z \otimes X - Z \otimes I - I \otimes X) \qquad (114)$$

$$H_{XI90} = \frac{\pi}{4}X \otimes I \qquad (115)$$

$$I = \begin{bmatrix} 1 & 0 \\ 0 & 1 \end{bmatrix}, \ X = \begin{bmatrix} 0 & 1 \\ 1 & 0 \end{bmatrix}, \ Y = \begin{bmatrix} 0 & -i \\ i & 0 \end{bmatrix}, \ Z = \begin{bmatrix} 1 & 0 \\ 0 & -1 \end{bmatrix} \qquad (116)$$

$$\{A \otimes B\}_{A,B=I/\sqrt{2}, \ X/\sqrt{2}, \ Y/\sqrt{2}, \ Z/\sqrt{2}} \qquad (117)$$

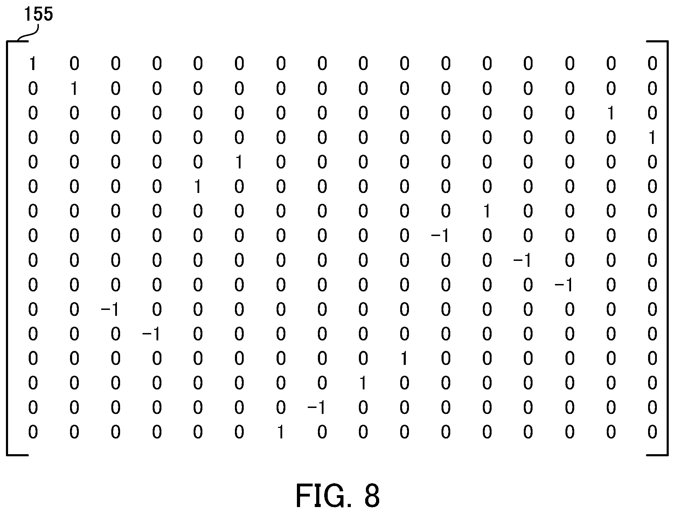

FIG. 8 illustrates an example of a quantum gate having a singularity. The CNOT·XI90 gate first performs a CNOT operation, followed by an XI90 operation. A matrix 155 is a unitary matrix U representing the ideal effect of the gate.

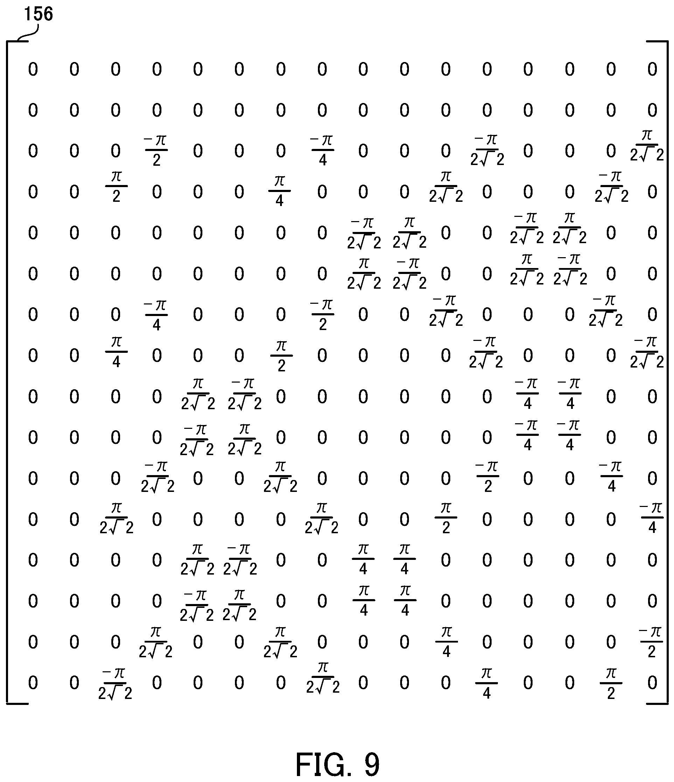

FIG. 9 illustrates an example of a generator of a quantum gate having a singularity. A matrix 156 represents a generator $L^{ideal}$, which is the ideal value of the generator of the gate. The matrix 156 corresponds to the matrix logarithm of the matrix 155 in FIG. 8.

The matrix 156 has 16 eigenvalues as represented in Formula (118). Among these 16 eigenvalues, the 13th and 14th pair, the 15th and 16th pair, and the 15th and 12th pair violate Formula (91). Therefore, the CNOT·XI90 gate corresponds to a singularity. In addition, all the 16 eigenvalues $a_j$ satisfy $\exp(aj)^8 = 1$. On the other hand, in the case where n is an integer of seven or less, there exists an eigenvalue $a_j$ that does not satisfy $\exp(a_j)^n = 1$. Thus, the order k of the gate is 8.

$$0,\ 0,\ 0,\ 0,\ i\frac{\pi}{4},\ i\frac{\pi}{4},\ -i\frac{\pi}{4},\ -i\frac{\pi}{4},$$
$$i\frac{\pi}{2},\ -i\frac{\pi}{2},\ i\frac{3\pi}{4},\ -i\frac{3\pi}{4},\ i\pi,\ -i\pi,\ i\frac{5\pi}{4},\ -i\frac{5\pi}{4} \qquad (118)$$

Since the CNOT·XI90 gate with k = 8, when repeated applied to a qubit eight times, returns the qubit to its original quantum state, the CNOT ·XI90 gate has a 45-degree rotation component. The information processing apparatus 100 is able to perform the linear approximation of the second embodiment on the quantum gate sequence including the gate. Next, the functions and processing procedures of the information processing apparatus 100 will be described.

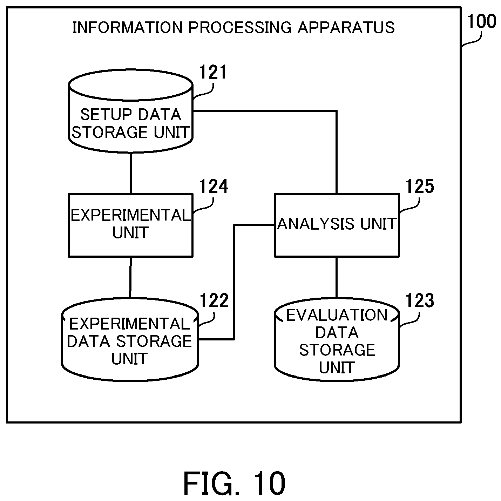

FIG. 10 is a block diagram illustrating an example of the functions of the information processing apparatus. The information processing apparatus 100 includes a setup data storage unit 121, an experimental data storage unit 122, an evaluation data storage unit 123, an experimental unit 124, and an analysis unit 125. The setup data storage unit 121, experimental data storage unit 122, and evaluation data storage unit 123 are implemented by using, for example, the RAM 102 or HDD 103. The experimental unit 124 and analysis unit 125 are implemented by using, for example, the CPU 101 or GPU 104, and programs.

The setup data storage unit 121 stores setup data. The setup data provides the details of experiments that are performed using the quantum computer 115. The setup data specifies each individual quantum gate G and its generator L. The setup data also provides the generator errors δL of non-evaluation target quantum gates. In addition, the setup data provides quantum gate sequences a and repetition counts N for trials, and also provides initializations ρ and measurements Π for the trials.

The experimental data storage unit 122 stores experimental data. The experimental data is generated by aggregating measurement values read out from the quantum computer 115. The experimental data represents a frequency distribution f for each combination of a quantum gate sequence a, a repetition count N, an initialization ρ, and a measurement Π. The evaluation data storage unit 123 stores evaluation data. The evaluation data represents the generator errors δL' of evaluation target quantum gates estimated from the setup data and the experimental data. Alternatively, the evaluation data may represent another indicator obtained by transforming the generator errors δL'.

The experimental unit 124 instructs the quantum computer 115 to perform quantum computation based on the setup data stored in the setup data storage unit 121. The experimental unit 124 reads out measurement values from the quantum computer 115, aggregates the read measurement values to generate experimental data, and stores the experimental data in the experimental data storage unit 122.

The analysis unit 125 analyzes the setup data stored in the setup data storage unit 121 and the experimental data stored in the experimental data storage unit 122 to estimate the generator errors of the evaluation target quantum gates. To this end, the analysis unit 125 generates an objective function and searches for generator errors that minimize the value of the objective function using a mathematical programming solver. The analysis unit 125 then generates evaluation data and saves the evaluation data in the evaluation data storage unit 123. In this connection, the analysis unit 125 may display the evaluation data on the display device 111 or send it to another information processing apparatus.

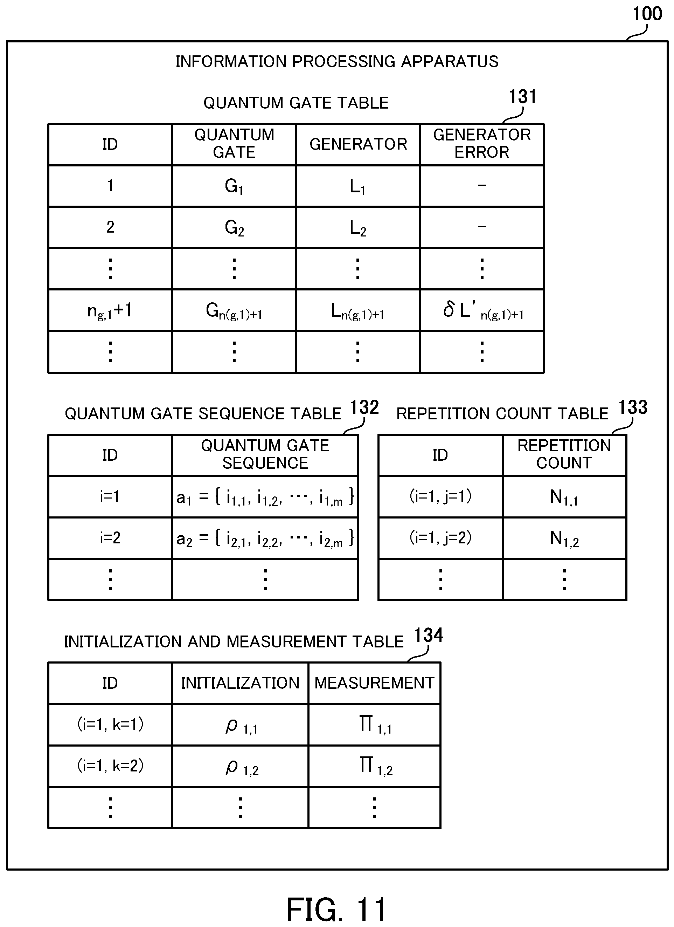

FIG. 11 illustrates an example of the setup data. The setup data storage unit 121 stores a quantum gate table 131, a quantum gate sequence table 132, a repetition count table 133, and an initialization and measurement table 134.

The quantum gate table 131 associates the identifier of a quantum gate, the representation matrix of the quantum gate, and the representation matrix of a generator with each other. The quantum gate table 131 registers therein $n_g$ different quantum gates. Among these $n_g$ quantum gates, $n_{g,1}$ quantum gates are evaluation targets, and the remaining quantum gates are non-evaluation targets. For each non-evaluation target quantum gate, the representation matrix of the generator error is additionally registered.

The quantum gate sequence table 132 associates an identifier i and a quantum gate sequence with each other. A quantum gate sequence of length m is described by arranging m identifiers registered in the quantum gate table 131. The repetition count table 133 associates identifiers (i, j) and a repetition count with each other. For each quantum gate sequence registered in the quantum gate sequence table 132, one or more repetition counts (typically two or more) are registered. The repetition count is preferably an integer multiple of the period of the quantum gate. The initialization and measurement table 134 associates identifiers (i, k), a representation matrix representing an initialization of a quantum state, and a representation matrix representing a measurement of the quantum state with each other. For each quantum gate sequence registered in the quantum gate sequence table 132, at least one combination of initialization and measurement is registered.

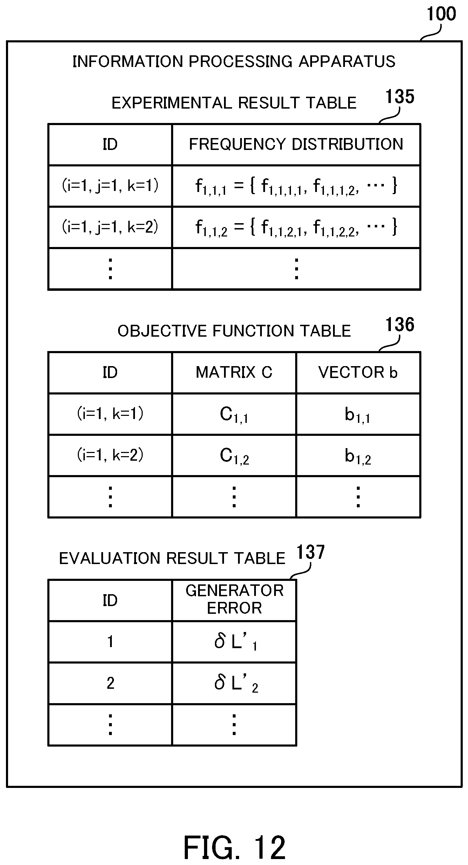

FIG. 12 illustrates an example of experimental data and evaluation data. The experimental data storage unit 122 stores an experimental result table 135. The experimental result table 135 associates identifiers (i, j, k) and a frequency distribution with each other. For each combination of a quantum gate sequence $a_i$, a repetition count $N_{i,j}$, and a pair of initialization and measurement ($\rho_{i,k}$, $\Pi_{i,k}$), one frequency distribution is registered. The frequency distribution is a list of the frequencies of a plurality of measurement values.

The analysis unit 125 generates an objective function table 136. The objective function table 136 associates identifiers (i, k), a matrix C, and a vector b with each other. From each combination of a quantum gate sequence $a_i$ and a pair of initialization and measurement ($\rho_{i,k}$, $\Pi_{i,k}$), one matrix C and one vector b are calculated. The objective function representing the quality of the generator error estimation is defined using the matrices C and vectors b for all combinations of $a_i$ and ($\rho_{i,k}$, $\Pi_{i,k}$).

The evaluation data storage unit 123 stores an evaluation result table 137. The evaluation result table 137 associates the identifier of a quantum gate and the estimated value of its generator error with each other. The same identifiers as used in the quantum gate table 131 are used here. The evaluation result table 137 contains the generator errors of the $n_{g,1}$ evaluation target quantum gates among the $n_g$ quantum gates.

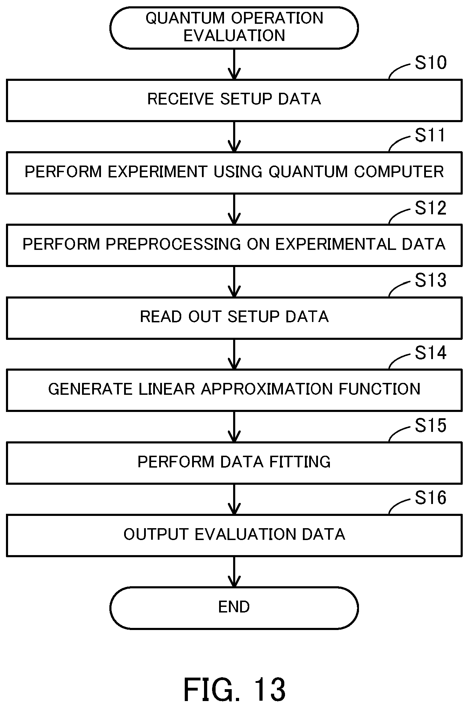

FIG. 13 is a first flowchart illustrating an example procedure for quantum operation evaluation. The flowchart of FIG. 13 illustrates an overall flow of quantum operation evaluation performed by the information processing apparatus 100. In step S10, the experimental unit 124 receives setup data from a user. The setup data includes the quantum gate sequence a and the repetition count N for trials.

In step S11, the experimental unit 124 performs an experiment using the quantum computer 115 based on the setup data received in step S10. The experimental unit 124 generates a quantum circuit including an error amplification circuit based on the setup data, and instructs the quantum computer 115 to execute the quantum circuit. The experimental unit 124 reads out measurement values from the quantum computer 115. The experimental unit 124 generates experimental data by statistically processing the measurement values.

In step S12, the analysis unit 125 performs preprocessing on the experimental data generated in step S11. Through the preprocessing, the analysis unit 125 extracts a first-order component proportional to the repetition count N from the experimental data. In step S13, the analysis unit 125 reads the setup data received in step S10. The setup data includes information on evaluation target quantum gates that are to be evaluated for their implementation accuracy and information on non-evaluation target quantum gates that are not to be evaluated for their implementation accuracy.

In step S14, the analysis unit 125 generates a linear approximation function that linearly approximates the effect of the error amplification circuit on the errors of quantum gates using the read setup data. In step S15, the analysis unit 125 performs data fitting using the linear approximation function generated in step S14 and the preprocessed data obtained in step S12. Specifically, the analysis unit 125 fits the linear approximation function to the preprocessed data and estimates the errors of the evaluation target quantum gates.

In step S16, the analysis unit 125 generates and outputs evaluation data representing the estimated errors. In this connection, steps S11 and S12 and steps S13 and S14 may be executed in reverse order or in parallel. Further, steps S11 and S12 and steps S13 and S14 may be executed by different information processing apparatuses. In the case where the linear approximation function has already been generated, the analysis unit 125 may omit steps S13 and S14.

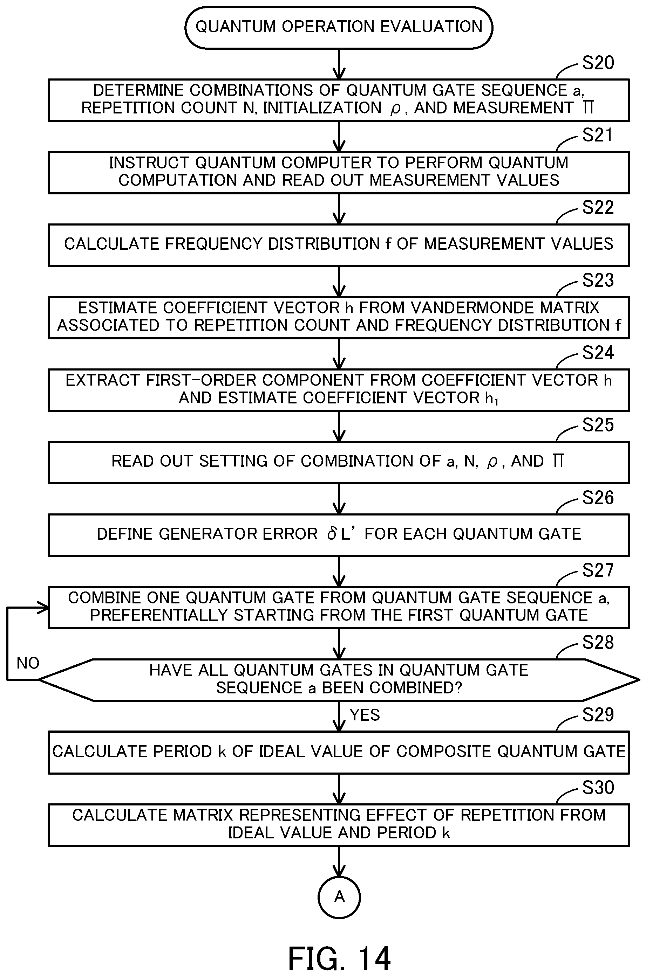

FIG. 14 is a second flowchart illustrating an example procedure for the quantum operation evaluation. The flowchart of FIG. 14 illustrates a more detailed flow of the quantum operation evaluation than that of FIG. 13. In step S20, the experimental unit 124 reads out setup data. The experimental unit 124 determines combinations of a quantum gate sequence a, a repetition count N, an initialization $\rho$, and a measurement $\Pi$ on the basis of the setup data.

In step S21, for each combination determined in step S20, the experimental unit 124 repeats, a plurality of times, a process of instructing the quantum computer 115 to perform quantum computation and reading out measurement values. In step S22, for each combination determined in step S20, the experimental unit 124 aggregates the plurality of measurement values read out in step S21 to calculate a frequency distribution f.

In step S23, the analysis unit 125 generates a Vandermonde matrix V associated with the repetition count N. For each combination of a quantum gate sequence a, an initialization $\rho$, a measurement $\Pi$, and a measurement value x, the analysis unit 125 estimates the coefficient vector h of the series expansion from the Vandermonde matrix V and the frequency of the measurement value x included in the frequency distribution f calculated in step S22.

In step S24, the analysis unit 125 extracts a first-order component from the coefficient vector h obtained in step S23 and estimates the coefficient vector $h_1$ for each combination of a quantum gate sequence a, an initialization $\rho$, and a measurement $\Pi$. In step S25, the analysis unit 125 reads out the setting of the combination of the quantum gate sequence a, the repetition count N, the initialization $\rho$, and the measurement $\Pi$ from the setup data.

In step S26, the analysis unit 125 defines a generator error $\delta L'$ for each quantum gate. The generator error $\delta L'$ of an evaluation target quantum gate corresponds to a variable representing an unknown value. This generator error $\delta L'$ is defined as in Formula (51). In step S27, the analysis unit 125 combines one quantum gate from the quantum gate sequence a, preferentially starting from the first quantum gate. To this end, the analysis unit 125 performs approximate calculations as in Formulas (53) and (54), utilizing the fact that the ideal value of a quantum gate is a unitary matrix and the generator error $\delta L'$ is small.

In step S28, the analysis unit 125 determines whether all the quantum gates included in the quantum gate sequence a have been combined. If all the quantum gates have been combined, the quantum gate sequence a is represented as a single composite quantum gate. If all the quantum gates have been combined, the process proceeds to step S29. Otherwise, the process returns to step S27.

In step S29, the analysis unit 125 calculates the period k of the ideal value of the composite quantum gate. The period k may be referred to as an order. The method of calculating the period k will be described later. In step S30, the analysis unit 125 approximately calculates a matrix representing the effect of repetition from the ideal value and the period k of the composite quantum gate, as in Formulas (56) and (57). At this time, the analysis unit 125 utilizes the fact that the ideal value of the composite quantum gate is a unitary matrix, that the ideal value of the composite quantum gate has cyclicity as represented in Formula (55), and that the generator error $\delta L'$ is small.

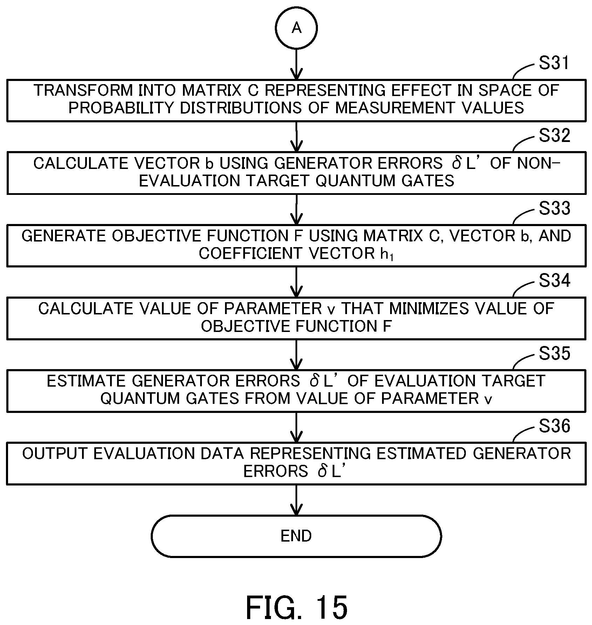

FIG. 15 is the second flowchart (continuation) illustrating the example procedure for the quantum operation evaluation. In step S31, the analysis unit 125 transforms the matrix calculated in step S30 into a matrix C representing the effect in the space of the probability distributions of the measurement values, using the initialization $\rho$ and the measurement $\Pi$. In step S32, the analysis unit 125 calculates a vector b using the known generator errors $\delta L'$ of the non-evaluation target quantum gates.

In step S33, the analysis unit 125 generates an objective function F using the matrix C obtained in step S31, the vector b obtained in step S32, and the coefficient vector $h_1$ obtained in step S24. In step S34, the analysis unit 125 calculates the value of the parameter v that minimizes the value of the objective function F generated in step S33, using a mathematical programming solver.

In step S35, the analysis unit 125 estimates the generator errors $\delta L'$ of the evaluation target quantum gates from the value of the parameter v calculated in step S34. In step S36, the analysis unit 125 generates evaluation data representing the generator errors $\delta L'$ estimated in step S35, and outputs the evaluation data.

In this connection, step S20 corresponds to step S10 of FIG. 13. Steps S21 and S22 correspond to step S11 of FIG. 13. Steps S23 and S24 correspond to step S12 of FIG. 13. Step S25 corresponds to step S13 of FIG. 13. Steps S26 to S33 correspond to step S14 of FIG. 13. Steps S34 and S35 correspond to step S15 of FIG. 13. Step S36 corresponds to step S16 of FIG. 13.

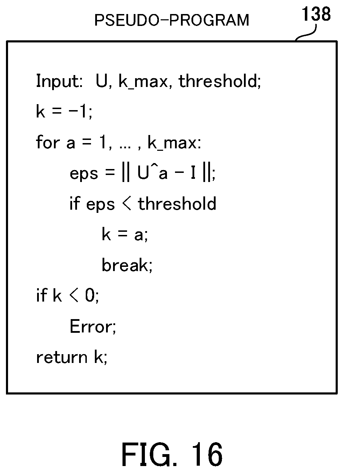

FIG. 16 illustrates an example of a pseudo-program for determining the period of a quantum gate. A pseudo-program 138 is an example of an algorithm for determining the period k of a quantum gate. The algorithm described by the pseudo-program 138 is executed in above-described step S29.

The analysis unit 125 receives a unitary matrix U, the maximum value of the period k, and a threshold for error. The analysis unit 125 initializes k to -1 and a to 1. The analysis unit 125 calculates the matrix norm of the difference between the a-th power of U and the identity matrix I. The matrix norm is a scalar value that is a real number. For example, the Frobenius norm is used as the matrix norm.

The analysis unit 125 determines whether the matrix norm is less than the threshold. If the matrix norm is less than the threshold, the analysis unit 125 determines that a is the period k of the unitary matrix U. On the other hand, if the matrix norm is equal to or greater than the threshold, the analysis unit 125 increases a by one and recalculates the matrix norm. If the period k is not determined even when a reaches the maximum value, the analysis unit 125 outputs a warning.

Note that a quantum gate G with an error may be defined using a generator error $\delta L''$, instead of the generator error $\delta L'$, as in Formula (119). In the case of using the generator error $\delta L'$, the unitary matrix U representing the ideal value of the quantum gate is multiplied by the matrix exponential of the generator error $\delta L'$ from the left. This may be interpreted as the generator error being decomposed on the left side. In the case of using the generator error $\delta L''$, on the other hand, the unitary matrix U is multiplied by the matrix exponential of $\delta L''$ from the right. This may be interpreted as the generator error being decomposed on the right side.

There are cases that the generator error $\delta L''$ does not match the generator error $\delta L$ or $\delta L'$. However, the information processing apparatus 100 is able to evaluate the generator error $\delta L''$ with the same method as used for the generator error $\delta L'$. The information processing apparatus 100 may output the generator error $\delta L''$, instead of or in addition to the generator error $\delta L'$. Furthermore, the information processing apparatus 100 may transform the generator error $\delta L''$ into the generator error $\delta L$. The information processing apparatus 100 may also use the estimated generator error $\delta L''$ to calibrate the quantum computer 115.

$$G = e^{L^{\text{ideal}}+\delta L} = e^{\delta L'}U = U e^{\delta L''} \qquad (119)$$

The relationship of Formula (120) using the unitary matrix U holds between the generator error δL" and the generator error δL. In addition, using the linear map dcl, the relationship of Formula (121) holds between the generator error δL' and the generator error δL within the range of the first-order approximation. Similarly, using the linear map dcr, the relationship of Formula (122) holds between the generator error δL" and the generator error δL within the range of the first-order approximation.

$$\delta L'' = U^{\dagger} \delta L\, U \qquad (120)$$

$$\delta L' = \text{dcl}_L(\delta L) + O(||\delta L||^2) \qquad (121)$$

$$\delta L'' = \text{dcr}_L(\delta L) + O(||\delta L||^2) \qquad (122)$$

Therefore, by replacing the above-described δL' with dcl(δL), a linear approximation with respect to δL is achieved. Therefore, the evaluation method of evaluating δL' is usable as an evaluation method of evaluating δL. Similarly, by replacing δL" with dcr(δL), a linear approximation with respect to δL is achieved. Therefore, the evaluation method of evaluating δL" is usable as an evaluation method of evaluating δL.

As described above, the information processing apparatus 100 of the second embodiment estimates the errors of quantum gates within the quantum computer 115, using the quantum tomography. That is, the information processing apparatus 100 is able to efficiently estimate the errors of the plurality of quantum gates collectively. Furthermore, the information processing apparatus 100 causes the quantum computer 115 to execute an error amplification circuit in which the same quantum gate sequence is repeated. As a result, the very small errors of the quantum gates are amplified, which contributes to enhancing the accuracy of estimating the errors from experimental data.

In addition, a user is able to adjust the values of the control parameters within the quantum computer 115 on the basis of the estimated errors, which improves the accuracy of the quantum operations performed by the quantum computer 115. The information processing apparatus 100 also transforms quantum gates into generators and linearly approximates the effect of the error amplification circuit on the generator errors. This reduces the load of the data analysis and improves the numerical stability of the estimated errors.

In addition, the information processing apparatus 100 defines the generator error of a quantum gate such that the quantum gate is represented as the product of a unitary matrix representing the ideal value of the quantum gate and the matrix exponential of the generator error. Then, utilizing the property of the unitary matrix and the fact that the generator error is small, the information processing apparatus 100 combines quantum gates without using either the linear map cml or cmr. This enables the information processing apparatus 100 to complete the combining process even if a matrix corresponding to a singularity appears during the combining process, which enables a wider variety of quantum gates to be combined.

In addition, by utilizing the fact that the ideal value of a composite quantum gate is a unitary matrix and has cyclicity, the information processing apparatus 100 linearly approximates the effect of repetition without using the linear map cml or cmr. Accordingly, the information processing apparatus 100 is able to complete the approximate calculation while avoiding the influence of singularities. Therefore, the linear approximation is applicable to a wider variety of quantum gates.

In particular, the information processing apparatus 100 is able to estimate errors in various types of rotation gates having cyclicity, such as 180-degree rotation gates, 90-degree rotation gates, and 45-degree rotation gates. Further, the information processing apparatus 100 does not need to use a different calculation method for the effect of repetition, depending on whether a composite quantum gate corresponds to a singularity, thereby simplifying the approximate calculation. In addition, the information processing apparatus 100 does not need to perform spectral decomposition with a high load in either the combining of quantum gates or the repetition of the composite quantum gate, which allows for a reduction in the amount of calculation.

In one aspect, the evaluation of errors in quantum gates is streamlined.

**Claims**

1. A computer program that causes a computer to perform a process comprising:

   acquiring measurement data (24) representing an execution result of executing, on a quantum computer, a quantum circuit (21) in which a quantum gate sequence (22) including a first quantum gate (23) is repeated N times, the N being an integer of one or more;
   determining, from a first matrix representing an ideal value of the quantum gate sequence, a period (29) of k such that a k-th power of the first matrix (27) yields an identity matrix, the k being an integer of one or more;
   generating a linear approximation function (25) that linearly approximates an influence of an error (26), which the quantum computer has with respect to the first quantum gate, on the measurement data by approximating repetition of the quantum gate sequence using a matrix exponential of a first transformation result obtained by transforming the error using the first matrix, the N (28), and the period; and
   estimating the error using the linear approximation function and the measurement data.

2. The computer program according to claim 1, wherein the first transformation result is generated by summing, over different values of m, a product of an m-th power of the first matrix (U), the error ($\delta L'$), and an m-th power of an adjoint matrix ($U^\dagger$) of the first matrix, and multiplying the sum by the N and a reciprocal of the k, the m being a non-negative integer less than the k.

3. The computer program according to claim 1 or claim 2, wherein the N is a multiple of the k.

4. The computer program according to any preceding claim, wherein the generating includes defining the first quantum gate (G) as a product of a second matrix representing an ideal value of the first quantum gate and a matrix exponential of the error ($\delta L'$).

5. The computer program according to any preceding claim, wherein the generating includes approximating the quantum gate sequence by a product of a second matrix ($U_1$) representing an ideal value of the first quantum gate ($G_1$), a third matrix ($U_2$) representing an ideal value of a second quantum gate ($G_2$) included in the quantum gate sequence, and a matrix exponential of a second transformation result obtained by transforming the error ($\delta L'$) using the third matrix.

6. A quantum operation evaluation method executed by a computer, the quantum operation evaluation method comprising:

   acquiring measurement data (24) representing an execution result of executing, on a quantum computer, a quantum circuit (21) in which a quantum gate sequence (22) including a first quantum gate (23) is repeated N times, the N being an integer of one or more;
   determining, from a first matrix (27) representing an ideal value of the quantum gate sequence, a period (29) of k such that a k-th power of the first matrix yields an identity matrix, the k being an integer of one or more;
   generating a linear approximation function (25) that linearly approximates an influence of an error (26), which the quantum computer has with respect to the first quantum gate, on the measurement data by approximating repetition of the quantum gate sequence using a matrix exponential of a first transformation result obtained by transforming the error using the first matrix, the N (28), and the period; and
   estimating the error using the linear approximation function and the measurement data.

7. An information processing apparatus comprising:

   storage means (11) for storing measurement data (24) representing an execution result of executing, on a quantum computer, a quantum circuit (21) in which a quantum gate sequence (22) including a first quantum gate (23) is repeated N times, the N being an integer of one or more; and
   processing means (12) for:

      determining, from a first matrix (27) representing an ideal value of the quantum gate sequence, a period (29) of k such that a k-th power of the first matrix yields an identity matrix, the k being an integer of one or more;
      generating a linear approximation function (25) that linearly approximates an influence of an error (26), which the quantum computer has with respect to the first quantum gate, on the measurement data by approximating repetition of the quantum gate sequence using a matrix exponential of a first transformation result obtained by transforming the error using the first matrix, the N (28), and the period; and
estimating the error using the linear approximation function and the measurement data.

INFORMATION PROCESSING APPARATUS  **10**

STORAGE UNIT  **11**

QUANTUM CIRCUIT  **21**

×N

$G_1$   $\cdots$

**22**

**23**

MEASUREMENT DATA
{ $x_1$: 0.7, $x_2$: 0.2, $\cdots$ }  **24**

LINEAR APPROXIMATION FUNCTION $x = f(\delta L')$  **25**

$$[\exp\{\delta L'\}U]^N \approx \exp\{N \cdot 1/k \cdot \Sigma (U^{\dagger m} \delta L' U^m)\}$$

ERROR  **26**   MATRIX  **27**   REPETITION COUNT  **28**   PERIOD  **29**

$\delta L'$   U   N   k

PROCESSING UNIT  **12**

FIG. 1

INFORMATION PROCESSING APPARATUS  100

CPU  101

GPU  104

DISPLAY DEVICE  111

RAM  102

INPUT INTERFACE  105

INPUT DEVICE  112

HDD  103

MEDIA READER  106

STORAGE MEDIUM  113

COMMUNI-CATION INTERFACE  107

NETWORK  114

INTERFACE  108

BUS

QUANTUM COMPUTER  115

QUANTUM OPERATION UNIT  116

CONTROL UNIT  117

FIG. 2

FIG. 3

QUANTUM GATE SEQUENCE

FIG. 4

151

$$\begin{bmatrix}
1 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 1 & 0 & 0 & 0 & 0 & 0 & 0 & 0 & 0 & 0 & 0 & 0 & 0 \\
0 & 0 & 0 & 0 & 1 & 0 & 0 & 0 & 0 & 0 & 0 & 0 & 0 & 0 & 0 & 0 \\
0 & 0 & 0 & 0 & 0 & 1 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 1 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 1 & 0 & 0 & 0 & 0 \\
0 & 0 & 0 & 0 & 0 & 0 & 0 & 0 & 0 & 0 & 0 & 0 & 1 & 0 & 0 & 0 \\
0 & 0 & 0 & 0 & 0 & 0 & 0 & 0 & 0 & 0 & 0 & 0 & 0 & 1 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0
\end{bmatrix}$$

FIG. 5

152

$$
\begin{bmatrix}
0.5 & -0.5 & 0 & 0 & 0 & 0 & 0 & 0 & 0 & 0 & 0 & 0 & 0 & 0 & 0 & 0 \\
0.5 & -0.5 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0.5 & 0.5 & 0 & 0 & 0 & 0 & 0 & 0 & 0 & 0 & 0 & 0 & 0 \\
0 & 0 & 0 & 0.5 & 0.5 & 0 & 0 & 0 & 0 & 0 & 0 & 0 & 0 & 0 & 0 & 0 \\
0 & 0 & 0 & 0 & 0 & 1 & 0 & 0 & 0 & 0 & 0 & 0 & 0 & 0 & 0 & 0 \\
0 & 0 & 0 & 0 & 0 & 0 & -1 & 0 & 0 & 0 & 0 & 0 & 0 & 0 & 0 & 0 \\
0 & 0 & 0 & 0 & 0 & 0 & 0 & -0.5 & -0.5 & 0 & 0 & 0 & 0 & 0 & 0 & 0 \\
0 & 0 & 0 & 0 & 0 & 0 & 0 & 0.5 & 0.5 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & -0.5 & -0.5 & 0 & 0 & 0 & 0 \\
0 & 0 & 0 & 0 & 0 & 0 & 0 & 0 & 0 & 0 & 0.5 & 0.5 & 0 & 0 & 0 & 0 \\
0 & 0 & 0 & 0 & 0 & 0 & 0 & 0 & 0 & 0 & 0 & 0 & 1 & 0 & 0 & 0 \\
0 & 0 & 0 & 0 & 0 & 0 & 0 & 0 & 0 & 0 & 0 & 0 & 0 & 0.5 & -0.5 & 0 \\
0 & 0 & 0 & 0 & 0 & 0 & 0 & 0 & 0 & 0 & 0 & 0 & 0 & 0.5 & -0.5 & 0 \\
0 & 0 & 0 & 0 & 0 & 0 & 0 & 0 & 0 & 0 & 0 & 0 & 0 & 0 & 0 & 0
\end{bmatrix}
$$

FIG. 6

153

$$dL' = \begin{bmatrix} 0.00000000 & 0.00000000 & 0.00000000 & 0.00000000 \\ -0.00326111 & -0.01007692 & 0.00652604 & -0.01035286 \\ 0.00062506 & 0.00326012 & -0.00868652 & 0.01133078 \\ 0.00232321 & 0.00528979 & -0.01010608 & -0.01045666 \end{bmatrix}$$

154

$$dL'_{est} = \begin{bmatrix} 0.00000000 & 0.00000000 & 0.00000000 & 0.00000000 \\ -0.00324375 & -0.01008980 & 0.00163511 & -0.01035281 \\ 0.00063778 & 0.00163511 & -0.00868718 & 0.01133076 \\ -0.00010145 & 0.00528332 & -0.01009938 & -0.01045673 \end{bmatrix}$$

## FIG. 7

155

$$\begin{bmatrix} 1 & 0 & 0 & 0 & 0 & 0 & 0 & 0 & 0 & 0 & 0 & 0 & 0 & 0 & 0 & 0 \\ 0 & 1 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 1 & 0 \\ 0 & 0 & 0 & 0 & 0 & 0 & 0 & 0 & 0 & 0 & 0 & 0 & 0 & 0 & 0 & 1 \\ 0 & 0 & 0 & 0 & 0 & 1 & 0 & 0 & 0 & 0 & 0 & 0 & 0 & 0 & 0 & 0 \\ 0 & 0 & 0 & 0 & 1 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 1 & 0 & 0 & 0 & 0 \\ 0 & 0 & 0 & 0 & 0 & 0 & 0 & 0 & 0 & 0 & -1 & 0 & 0 & 0 & 0 & 0 \\ 0 & 0 & 0 & 0 & 0 & 0 & 0 & 0 & 0 & 0 & 0 & 0 & -1 & 0 & 0 & 0 \\ 0 & 0 & 0 & 0 & 0 & 0 & 0 & 0 & 0 & 0 & 0 & 0 & 0 & -1 & 0 & 0 \\ 0 & 0 & -1 & 0 & 0 & 0 & 0 & 0 & 0 & 0 & 0 & 0 & 0 & 0 & 0 & 0 \\ 0 & 0 & 0 & -1 & 0 & 0 & 0 & 0 & 0 & 0 & 0 & 0 & 0 & 0 & 0 & 0 \\ 0 & 0 & 0 & 0 & 0 & 0 & 0 & 0 & 0 & 1 & 0 & 0 & 0 & 0 & 0 & 0 \\ 0 & 0 & 0 & 0 & 0 & 0 & 0 & 0 & 1 & 0 & 0 & 0 & 0 & 0 & 0 & 0 \\ 0 & 0 & 0 & 0 & 0 & 0 & 0 & -1 & 0 & 0 & 0 & 0 & 0 & 0 & 0 & 0 \\ 0 & 0 & 0 & 0 & 0 & 0 & 1 & 0 & 0 & 0 & 0 & 0 & 0 & 0 & 0 & 0 \end{bmatrix}$$

FIG. 8

156

$$
\begin{bmatrix}
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & \frac{-\pi}{2} & 0 & 0 & 0 & \frac{-\pi}{4} & 0 & 0 & 0 & \frac{-\pi}{2\sqrt{2}} & 0 & 0 & 0 & \frac{\pi}{2\sqrt{2}} \\
0 & 0 & \frac{\pi}{2} & 0 & 0 & 0 & \frac{\pi}{4} & 0 & 0 & 0 & \frac{\pi}{2\sqrt{2}} & 0 & 0 & 0 & \frac{-\pi}{2\sqrt{2}} & 0 \\
0 & 0 & 0 & 0 & 0 & 0 & 0 & 0 & \frac{-\pi}{2\sqrt{2}} & \frac{\pi}{2\sqrt{2}} & 0 & 0 & \frac{-\pi}{2\sqrt{2}} & \frac{\pi}{2\sqrt{2}} & 0 & 0 \\
0 & 0 & 0 & 0 & 0 & 0 & 0 & 0 & \frac{\pi}{2\sqrt{2}} & \frac{-\pi}{2\sqrt{2}} & 0 & 0 & \frac{\pi}{2\sqrt{2}} & \frac{-\pi}{2\sqrt{2}} & 0 & 0 \\
0 & 0 & 0 & \frac{-\pi}{4} & 0 & 0 & 0 & \frac{-\pi}{2} & 0 & 0 & \frac{-\pi}{2\sqrt{2}} & 0 & 0 & 0 & \frac{-\pi}{2\sqrt{2}} & 0 \\
0 & 0 & \frac{\pi}{4} & 0 & 0 & 0 & \frac{\pi}{2} & 0 & 0 & 0 & 0 & \frac{-\pi}{2\sqrt{2}} & 0 & 0 & 0 & \frac{-\pi}{2\sqrt{2}} \\
0 & 0 & 0 & 0 & \frac{\pi}{2\sqrt{2}} & \frac{-\pi}{2\sqrt{2}} & 0 & 0 & 0 & 0 & 0 & 0 & \frac{-\pi}{4} & \frac{-\pi}{4} & 0 & 0 \\
0 & 0 & 0 & 0 & \frac{-\pi}{2\sqrt{2}} & \frac{\pi}{2\sqrt{2}} & 0 & 0 & 0 & 0 & 0 & 0 & \frac{-\pi}{4} & \frac{-\pi}{4} & 0 & 0 \\
0 & 0 & 0 & \frac{-\pi}{2\sqrt{2}} & 0 & 0 & \frac{\pi}{2\sqrt{2}} & 0 & 0 & 0 & 0 & \frac{-\pi}{2} & 0 & 0 & \frac{-\pi}{4} & 0 \\
0 & 0 & \frac{\pi}{2\sqrt{2}} & 0 & 0 & 0 & 0 & \frac{\pi}{2\sqrt{2}} & 0 & 0 & \frac{\pi}{2} & 0 & 0 & 0 & 0 & \frac{-\pi}{4} \\
0 & 0 & 0 & 0 & \frac{\pi}{2\sqrt{2}} & \frac{-\pi}{2\sqrt{2}} & 0 & 0 & \frac{\pi}{4} & \frac{\pi}{4} & 0 & 0 & 0 & 0 & 0 & 0 \\
0 & 0 & 0 & 0 & \frac{-\pi}{2\sqrt{2}} & \frac{\pi}{2\sqrt{2}} & 0 & 0 & \frac{\pi}{4} & \frac{\pi}{4} & 0 & 0 & 0 & 0 & 0 & 0 \\
0 & 0 & 0 & \frac{\pi}{2\sqrt{2}} & 0 & 0 & \frac{\pi}{2\sqrt{2}} & 0 & 0 & 0 & \frac{\pi}{4} & 0 & 0 & 0 & 0 & \frac{-\pi}{2} \\
0 & 0 & \frac{-\pi}{2\sqrt{2}} & 0 & 0 & 0 & 0 & \frac{\pi}{2\sqrt{2}} & 0 & 0 & 0 & \frac{\pi}{4} & 0 & 0 & \frac{\pi}{2} & 0
\end{bmatrix}
$$

FIG. 9

INFORMATION PROCESSING APPARATUS 100

SETUP DATA STORAGE UNIT 121

EXPERIMENTAL UNIT 124

ANALYSIS UNIT 125

EXPERIMENTAL DATA STORAGE UNIT 122

EVALUATION DATA STORAGE UNIT 123

FIG. 10

100

## INFORMATION PROCESSING APPARATUS

### QUANTUM GATE TABLE

131

| ID | QUANTUM GATE | GENERATOR | GENERATOR ERROR |
|---|---|---|---|
| 1 | $G_1$ | $L_1$ | − |
| 2 | $G_2$ | $L_2$ | − |
| ⋮ | ⋮ | ⋮ | ⋮ |
| $n_{g,1}+1$ | $G_{n(g,1)+1}$ | $L_{n(g,1)+1}$ | $\delta L'_{n(g,1)+1}$ |
| ⋮ | ⋮ | ⋮ | ⋮ |

### QUANTUM GATE SEQUENCE TABLE  132

| ID | QUANTUM GATE SEQUENCE |
|---|---|
| i=1 | $a_1 = \{ i_{1,1}, i_{1,2}, \cdots, i_{1,m} \}$ |
| i=2 | $a_2 = \{ i_{2,1}, i_{2,2}, \cdots, i_{2,m} \}$ |
| ⋮ | ⋮ |

### REPETITION COUNT TABLE  133

| ID | REPETITION COUNT |
|---|---|
| (i=1, j=1) | $N_{1,1}$ |
| (i=1, j=2) | $N_{1,2}$ |
| ⋮ | ⋮ |

### INITIALIZATION AND MEASUREMENT TABLE  134

| ID | INITIALIZATION | MEASUREMENT |
|---|---|---|
| (i=1, k=1) | $\rho_{1,1}$ | $\Pi_{1,1}$ |
| (i=1, k=2) | $\rho_{1,2}$ | $\Pi_{1,2}$ |
| ⋮ | ⋮ | ⋮ |

# FIG. 11

**INFORMATION PROCESSING APPARATUS** — 100

EXPERIMENTAL RESULT TABLE — 135

| ID | FREQUENCY DISTRIBUTION |
|---|---|
| ($i=1, j=1, k=1$) | $f_{1,1,1} = \{ f_{1,1,1,1}, f_{1,1,1,2}, \cdots \}$ |
| ($i=1, j=1, k=2$) | $f_{1,1,2} = \{ f_{1,1,2,1}, f_{1,1,2,2}, \cdots \}$ |
| ⋮ | ⋮ |

OBJECTIVE FUNCTION TABLE — 136

| ID | MATRIX C | VECTOR b |
|---|---|---|
| ($i=1, k=1$) | $C_{1,1}$ | $b_{1,1}$ |
| ($i=1, k=2$) | $C_{1,2}$ | $b_{1,2}$ |
| ⋮ | ⋮ | ⋮ |

EVALUATION RESULT TABLE — 137

| ID | GENERATOR ERROR |
|---|---|
| 1 | $\delta L'_1$ |
| 2 | $\delta L'_2$ |
| ⋮ | ⋮ |

# FIG. 12

```
        ┌─────────────────────────┐
        │   QUANTUM OPERATION     │
        │      EVALUATION         │
        └────────────┬────────────┘
                     │              ⌐S10
        ┌────────────▼────────────┐
        │    RECEIVE SETUP DATA    │
        └────────────┬────────────┘
                     │              ⌐S11
        ┌────────────▼────────────┐
        │ PERFORM EXPERIMENT USING QUANTUM COMPUTER │
        └────────────┬────────────┘
                     │              ⌐S12
        ┌────────────▼────────────┐
        │ PERFORM PREPROCESSING ON EXPERIMENTAL DATA │
        └────────────┬────────────┘
                     │              ⌐S13
        ┌────────────▼────────────┐
        │    READ OUT SETUP DATA   │
        └────────────┬────────────┘
                     │              ⌐S14
        ┌────────────▼────────────┐
        │ GENERATE LINEAR APPROXIMATION FUNCTION │
        └────────────┬────────────┘
                     │              ⌐S15
        ┌────────────▼────────────┐
        │    PERFORM DATA FITTING  │
        └────────────┬────────────┘
                     │              ⌐S16
        ┌────────────▼────────────┐
        │   OUTPUT EVALUATION DATA │
        └────────────┬────────────┘
                     │
        ┌────────────▼────────────┐
        │          END            │
        └─────────────────────────┘
```

# FIG. 13

QUANTUM OPERATION EVALUATION

S20

DETERMINE COMBINATIONS OF QUANTUM GATE SEQUENCE a, REPETITION COUNT N, INITIALIZATION $\rho$, AND MEASUREMENT $\Pi$

S21

INSTRUCT QUANTUM COMPUTER TO PERFORM QUANTUM COMPUTATION AND READ OUT MEASUREMENT VALUES

S22

CALCULATE FREQUENCY DISTRIBUTION f OF MEASUREMENT VALUES

S23

ESTIMATE COEFFICIENT VECTOR h FROM VANDERMONDE MATRIX ASSOCIATED TO REPETITION COUNT AND FREQUENCY DISTRIBUTION f

S24

EXTRACT FIRST-ORDER COMPONENT FROM COEFFICIENT VECTOR h AND ESTIMATE COEFFICIENT VECTOR $h_1$

S25

READ OUT SETTING OF COMBINATION OF a, N, $\rho$, AND $\Pi$

S26

DEFINE GENERATOR ERROR $\delta L'$ FOR EACH QUANTUM GATE

S27

COMBINE ONE QUANTUM GATE FROM QUANTUM GATE SEQUENCE a, PREFERENTIALLY STARTING FROM THE FIRST QUANTUM GATE

S28

HAVE ALL QUANTUM GATES IN QUANTUM GATE SEQUENCE a BEEN COMBINED?

NO

YES

S29

CALCULATE PERIOD k OF IDEAL VALUE OF COMPOSITE QUANTUM GATE

S30

CALCULATE MATRIX REPRESENTING EFFECT OF REPETITION FROM IDEAL VALUE AND PERIOD k

A

FIG. 14

(A)

S31
TRANSFORM INTO MATRIX C REPRESENTING EFFECT IN SPACE OF PROBABILITY DISTRIBUTIONS OF MEASUREMENT VALUES

S32
CALCULATE VECTOR b USING GENERATOR ERRORS $\delta L'$ OF NON-EVALUATION TARGET QUANTUM GATES

S33
GENERATE OBJECTIVE FUNCTION F USING MATRIX C, VECTOR b, AND COEFFICIENT VECTOR $h_1$

S34
CALCULATE VALUE OF PARAMETER v THAT MINIMIZES VALUE OF OBJECTIVE FUNCTION F

S35
ESTIMATE GENERATOR ERRORS $\delta L'$ OF EVALUATION TARGET QUANTUM GATES FROM VALUE OF PARAMETER v

S36
OUTPUT EVALUATION DATA REPRESENTING ESTIMATED GENERATOR ERRORS $\delta L'$

END

FIG. 15

PSEUDO-PROGRAM   **138**

```
Input:  U, k_max, threshold;
k = -1;
for a = 1, ... , k_max:
    eps = || U^a - I ||;
    if eps < threshold
        k = a;
        break;
if k < 0;
    Error;
return k;
```

# FIG. 16

Europäisches
Patentamt

European
Patent Office

Office européen
des brevets

## EUROPEAN SEARCH REPORT

**Application Number**

EP 25 19 1110

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Landa Haggai ET AL: "Experimental Bayesian estimation of quantum state preparation, measurement, and gate errors in multi-qubit devices", arXiv.org, 10 March 2022 (2022-03-10), pages 1-15, XP093340937, DOI: 10.48550/arxiv.2108.10686 Retrieved from the Internet: URL:https://arxiv.org/pdf/2108.10686 [retrieved on 2025-11-27] * abstract * * page 1, left-hand column, line 1 - page 13, right-hand column, line 25 * | 1-7 | INV. G06N10/20 G06N10/70 |
| A | TAKANORI SUGIYAMA ET AL: "Reliable Characterization for Improving and Validating Accurate Quantum Operations", ARXIV.ORG, CORNELL UNIVERSITY LIBRARY, 201 OLIN LIBRARY CORNELL UNIVERSITY ITHACA, NY 14853, 30 December 2020 (2020-12-30), XP081847820, * abstract * * page 1, left-hand column, line 1 - page 13, right-hand column, last line * * page 14, right-hand column, line 1 - page 33, last line * | 1-7 | TECHNICAL FIELDS SEARCHED (IPC) G06N |

-/--

The present search report has been drawn up for all claims

| Place of search | Date of completion of the search | Examiner |
|---|---|---|
| The Hague | 12 December 2025 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 19 1110

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HE-LIANG HUANG ET AL: "Near-Term Quantum Computing Techniques: Variational Quantum Algorithms, Error Mitigation, Circuit Compilation, Benchmarking and Classical Simulation", ARXIV.ORG, CORNELL UNIVERSITY LIBRARY, 201 OLIN LIBRARY CORNELL UNIVERSITY ITHACA, NY 14853, 27 December 2022 (2022-12-27), XP091403006, * abstract * * page 1, left-hand column, line 1 - page 37, left-hand column, line 20 * ----- | 1-7 | |
| X,P | TAKANORI SUGIYAMA: "Robust Lindbladian Tomography for Cyclic Quantum Gates", ARXIV.ORG, CORNELL UNIVERSITY LIBRARY, 201 OLIN LIBRARY CORNELL UNIVERSITY ITHACA, NY 14853, 16 March 2025 (2025-03-16), XP091961026, * abstract * * page 1, left-hand column, line 1 - page 11, right-hand column, line 10 * ----- | 1-7 | TECHNICAL FIELDS SEARCHED (IPC) |
| X,P | WO 2024/181166 A1 (UNIV TOKYO [JP]) 6 September 2024 (2024-09-06) * abstract; claims 1-14; figure 11 * * paragraph [0001] - paragraph [0036] * * paragraph [0038] - paragraph [0318] * ----- | 1-7 | |

The present search report has been drawn up for all claims

| Place of search | Date of completion of the search | Examiner |
|---|---|---|
| The Hague | 12 December 2025 | Totir, Felix |

EPO FORM 1503 03.82 (P04C01)

## ANNEX TO THE EUROPEAN SEARCH REPORT
## ON EUROPEAN PATENT APPLICATION NO.

EP 25 19 1110

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2025

| Patent document cited in search report | Publication date | Patent family member(s) | Publication date |
|---|---|---|---|
| WO 2024181166 A1 | 06-09-2024 | JP 2024122307 A | 09-09-2024 |
| | | WO 2024181166 A1 | 06-09-2024 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021131695 A
- WO 2022151737 A
- US 20230306294

**Non-patent literature cited in the description**

- **ERIK NIELSEN** ; **JOHN KING GAMBLE** ; **KENNETH RUDINGER** ; **TRAVIS SCHOLTEN** ; **KEVIN YOUNG** ; **ROBIN BLUME-KOHOUT**. Gate Set Tomography. *the open journal for quantum science*, October 2021, vol. 5, 557
- Reducing Unitary and Spectator Errors in Cross Resonance with Optimized Rotary Echoes. **NEEREJA SUNDARESAN** ; **ISAAC LAUER** ; **EMILY PRITCHETT** ; **EASWAR MAGESAN** ; **PETAR JURCEVIC** ; **JAY M. GAMBETTA**. PRX Quantum of the American Physical Society. December 2020, vol. 1, 020318
- **GABRIEL O. SAMACH** ; **AMI GREENE** ; **JOHANNES BORREGAARD** ; **MATTHIAS CHRISTANDL** ; **JOSEPH BARRETO** ; **DAVID K. KIM** ; **CHRISTOPHER M. MCNALLY** ; **ALEXANDER MELVILLE** ; **BETHANY M. NIEDZIELSKI** ; **YOUNG-KYU SUNG**. Lindblad Tomography of a Superconducting Quantum Processor. *Physical Review Applied of the American Physical Society*, December 2022, vol. 18, 064056
- **YANWU GU** ; **RAJESH MISHRA** ; **BERTHOLD-GEORG ENGLERT** ; **HUI KHOON NG**. Randomized Linear Gate-Set Tomography. *PRX Quantum of the American Physical Society*, August 2021, vol. 2, 030328